# EUROPEAN PATENT APPLICATION

(11) **EP 4 676 073 A1**
(43) Date of publication of application: **07.01.2026**
(21) Application number: 24763488.4
(22) Date of filing: 01.02.2024
(51) Int. Cl.: H04N 23/63, G03B 7/00, G03B 15/00, G03B 35/16, H04N 23/60

(54) **IMAGING DEVICE, IMAGING METHOD, AND PROGRAM**

(30) Priority: 28.02.2023 JP 2023029797
(71) Applicant: Sony Group Corporation, Tokyo 108-0075 (JP)
(72) Inventor: UYAMA, Keisuke, Tokyo 108-0075 (JP); SHIBUKAWA, Kentaro, Tokyo 108-0075 (JP); NAKAYAMA, Ryosuke, Tokyo 108-0075 (JP); YOSHIOKA, Keiichi, Tokyo 108-0075 (JP); HIRANO, Shinsaku, Tokyo 108-0075 (JP); SHIMIZU, Yoshihiro, Tokyo 108-0075 (JP)
(74) Representative: MFG Patentanwälte Meyer-Wildhagen Meggle-Freund Gerhard PartG mbB
(86) International application number: PCT/JP2024/003259
(87) International publication number: WO 2024/181004

(57) **Abstract**

An imaging device includes a display control unit configured to display a first indicator indicating a recommended imaging position and a second indicator indicating a current imaging position in a superimposed manner on an imaging monitor image, and perform processing for changing display of the first indicator in accordance with image obtaining processing for obtaining image data, and an imaging control unit configured to perform the image obtaining processing in accordance with a result of a matching determination between the first indicator and the second indicator on a screen.

## Description

### TECHNICAL FIELD

The present technology relates to an imaging device, an imaging method, and a program, and more particularly relates to a technique for enabling an imaging operation for three dimensions (3D) modeling to be more easily performed.

### BACKGROUND ART

As a method for 3D modeling of a 3D object having a three-dimensional shape, there is a method called photogrammetry, in which a plurality of images of the 3D object is captured from multiple directions and 3D data is generated on the basis of the plurality of captured images. For example, Patent Document 1 discloses this method.

In addition, there is a method called real-time 3D modeling, in which 3D data is generated instantaneously (in real-time) on the basis of information such as captured images, attitude information, and depth.

Furthermore, in recent years, a method collectively called neural rendering (for example, neural radiance fields (NeRF) and the like) has been proposed, in which neural fields are configured on the basis of attitudes of captured images and the captured images to generate an image from a desired viewpoint or a three-dimensional model.

### CITATION LIST

### PATENT DOCUMENT

Patent Document 1: Japanese Patent Application Laid-Open No. 2018-63693

### SUMMARY OF THE INVENTION

### PROBLEMS TO BE SOLVED BY THE INVENTION

In a case where 3D modeling is performed on the basis of captured images obtained by capturing images of a 3D object as in these methods, it is desirable to generate 3D data as accurate as possible with as few times of imaging as possible in order to reduce the amount of work and processing. For this purpose, it is required to capture images of a 3D object at more appropriate positions and attitudes.

It is difficult, however, for an imaging operator to identify the appropriate positions and attitudes for imaging.

The present disclosure, therefore, proposes a technique for facilitating, and improving efficiency of, an operation performed in a case where a user captures images of a 3D object using an imaging device.

### SOLUTIONS TO PROBLEMS

An imaging device according to the present technology includes a display control unit configured to display a first indicator indicating a recommended imaging position and a second indicator indicating a current imaging position in a superimposed manner on an imaging monitor image, and perform processing for changing display of the first indicator in accordance with image obtaining processing for obtaining image data, and an imaging control unit configured to perform the image obtaining processing in accordance with a result of a matching determination between the first indicator and the second indicator on a screen.

The first indicator is superimposed and displayed on the imaging monitor image, and the user is guided to set the recommended imaging position as a subject direction. The user adjusts the imaging position and an attitude (direction) of the imaging device such that the second indicator indicating the imaging position thereof substantially matches the first indicator. For example, in a case where the image obtaining processing is automatically performed as a result of the matching determination for determining a substantially matching state in which positions of the first indicator and the second indicator substantially match in the screen, the display of the first indicator is changed to indicate that an image has been captured as the image obtaining processing.

### BRIEF DESCRIPTION OF DRAWINGS

Fig. 1 is an explanatory diagram of an overview of photogrammetry.
Fig. 2 is an explanatory diagram of an overview of real-time 3D modeling.
Fig. 3 is an explanatory diagram of differences between photogrammetry and real-time 3D modeling.
Fig. 4 is a perspective view of an example of an appearance of an imaging device according to an embodiment of the present technology.
Fig. 5 is another perspective view of the example of the appearance of the imaging device according to the embodiment.
Fig. 6 is a block diagram of an example of an internal configuration of the imaging device according to the embodiment.
Fig. 7 is an explanatory diagram of a functional configuration of a server device according to the embodiment.
Fig. 8 is a block diagram of an information processing device applicable to the embodiment.
Fig. 9 is an explanatory diagram of a ROI setting screen according to the embodiment.
Fig. 10 is another explanatory diagram of the ROI setting screen according to the embodiment.
Fig. 11 is another explanatory diagram of the ROI setting screen according to the embodiment.
Fig. 12 is another explanatory diagram of the ROI setting screen according to the embodiment.
Fig. 13 is an explanatory diagram of a navigation screen according to the embodiment.
Fig. 14 is an explanatory diagram of target indicators according to the embodiment.
Fig. 15 is an explanatory diagram of changes in the navigation screen according to the embodiment.
Fig. 16 is an explanatory diagram of successful imaging on the navigation screen according to the embodiment.
Fig. 17 is an explanatory diagram of animations in the navigation screen according to the embodiment.
Fig. 18 is an explanatory diagram of changes in the navigation screen according to the embodiment.
Fig. 19 is an explanatory diagram of changes in the navigation screen according to the embodiment.
Fig. 20 is an explanatory diagram of inappropriate imaging on the navigation screen according to the embodiment.
Fig. 21 is an explanatory diagram of re-imaging on the navigation screen according to the embodiment.
Fig. 22 is another explanatory diagram of the re-imaging on the navigation screen according to the embodiment.
Fig. 23 is an explanatory diagram of changes in the navigation screen according to the embodiment.
Fig. 24 is an explanatory diagram of changes in the navigation screen according to the embodiment.
Fig. 25 is an explanatory diagram of a preview screen according to the embodiment.
Fig. 26 is an explanatory diagram of display of recommended imaging positions in the preview screen according to the embodiment.
Fig. 27 is an explanatory diagram of display based on image data evaluation in the preview screen according to the embodiment.
Fig. 28 is a flowchart of a display algorithm in a case where scanning is performed in real-time according to the embodiment.
Fig. 29 is an explanatory diagram of display portion setting of target indicators according to the embodiment.
Fig. 30 is another explanatory diagram of the display portion setting of target indicators according to the embodiment.
Fig. 31 is another explanatory diagram of the display portion setting of target indicators according to the embodiment.
Fig. 32 is another explanatory diagram of the display portion setting of target indicators according to the embodiment.
Fig. 33 is an explanatory diagram of a matching determination algorithm according to the embodiment.
Fig. 34 is a flowchart of a display algorithm in a case where pre-scanning is performed according to the embodiment.
Fig. 35 is an explanatory diagram of a display example of a direction presentation portion of a target indicator according to the embodiment.
Fig. 36 is an explanatory diagram of an example of target indicators according to the embodiment.
Fig. 37 is another explanatory diagram of the example of target indicators according to the embodiment.
Fig. 38 is another explanatory diagram of the example of target indicators according to the embodiment.
Fig. 39 is an explanatory diagram of a display example of the navigation screen according to the embodiment.
Fig. 40 is another explanatory diagram of the display example of the navigation screen according to the embodiment.
Fig. 41 is another explanatory diagram of the display example of the navigation screen according to the embodiment.
Fig. 42 is an explanatory diagram of changes in target indicators according to the embodiment.
Fig. 43 is an explanatory diagram of warning display according to the embodiment.
Fig. 44 is an explanatory diagram of speed display according to the embodiment.
Fig. 45 is an explanatory diagram of model display according to the embodiment.
Fig. 46 is an explanatory diagram of display for urging a user to perform re-imaging according to the embodiment.
Fig. 47 is an explanatory diagram of status display according to the embodiment.
Fig. 48 is an explanatory diagram of definition setting according to the embodiment.
Fig. 49 is an explanatory diagram of an example of quality display in the preview screen according to the embodiment.
Fig. 50 is an explanatory diagram of a display example of a portion where imaging is insufficient according to the embodiment.
Fig. 51 is an explanatory diagram of flag display in the preview screen and the navigation screen according to the embodiment.
Fig. 52 is an explanatory diagram of an example of self-position display in the preview screen according to the embodiment.
Fig. 53 is an explanatory diagram of an example of ROI setting according to the embodiment.
Fig. 54 is an explanatory diagram of a display example during the pre-scanning according to the embodiment.
Fig. 55 is an explanatory diagram of another display example during the pre-scanning according to the embodiment.

### MODE FOR CARRYING OUT THE INVENTION

An embodiment will be described hereinafter in the following order.
<1. 3D Modeling>
<2. Device Configurations>
<3. User Interface Screen>
<4. Processing Examples>
<5. Various Examples of Screen Display>
<6. Conclusion and Modifications>

Note that, in the present disclosure, "image obtaining processing" refers to capture of an image with an imaging device including an image sensor (imaging element) in order to obtain image data to be temporarily or permanently stored in a storage medium. The storage medium in which image data is to be stored may be inside or outside the imaging device. For example, image data may be immediately stored in the storage medium in the imaging device, but may be transmitted to another device or transmitted over a network (uploading or the like) and stored in the storage medium in an external device, instead. The term "image obtaining processing" is used to be distinguished from imaging only for displaying a subject image on a monitor.

In addition, images include both still images and moving images.

A captured image refers to a moving image or a still image captured by the image sensor, or an image thereof. That is, a captured image includes an image to be stored in the storage medium or an image to be displayed on the monitor as a through image or the like.

A captured image may be data itself (so-called RAW data) obtained by the image sensor or the like. Alternatively, a captured image may be an image subjected to color separation processing or color conversion processing. Alternatively, a captured image may be an image subjected to signal processing such as defect correction, noise reduction, automatic white balance (AWB), or gamma correction. Furthermore, a captured image may be subjected to another type of image processing.

### <1. 3D Modeling>

First, photogrammetry will be described.

As a method for generating (reconfiguring) a model of a three-dimensional shape of an object having the three-dimensional shape (also referred to as a 3D object), there is a method called photogrammetry, in which images of the 3D object are captured from multiple directions and a 3D model (3D data) is generated on the basis of the plurality of captured images. Note that, in the present disclosure, generation of a model of a three-dimensional shape of a 3D object will also be referred to as 3D modeling.

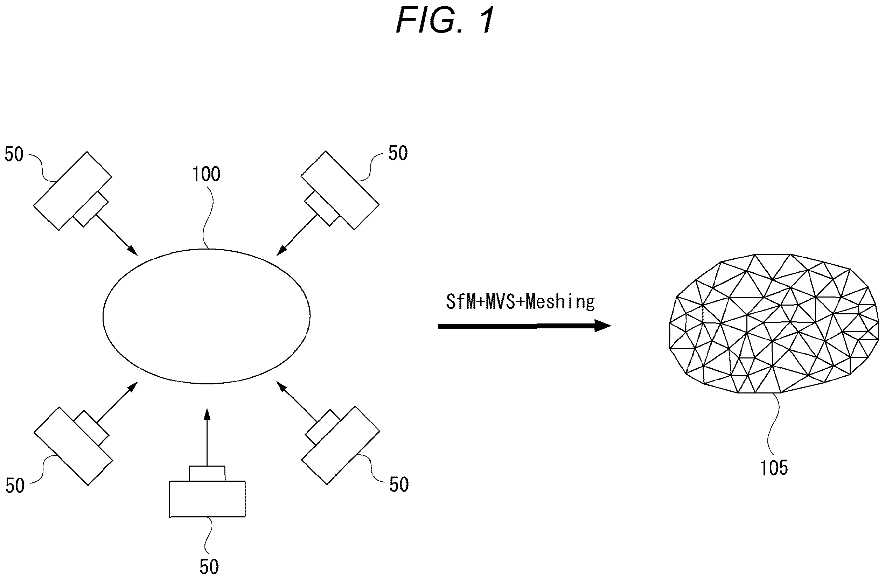

Photogrammetry is a method for reconfiguring a highly accurate three-dimensional model from a plurality of images captured from various viewpoints using the principle of triangulation. For example, images of a 3D object 100 are captured from a plurality of viewpoints through an imaging operation in which cameras 50 illustrated in Fig. 1 are used, and a plurality of captured images is obtained. Processing called structure from motion (SfM) and processing called multi view stereo (MVS) are then performed using these captured images and the like, and meshing and texturing are further performed as post-processing to generate a 3D model 105.

Note that "accuracy" of a 3D model herein can include not only reproducibility of a three-dimensional shape of a target 3D object, that is, exactness, definition, and the like of the three-dimensional shape, but also reproducibility (exactness, definition, and the like) of texture applied to surfaces of the 3D model.

In SfM, for example, corresponding points are searched for between captured images, positions and attitudes of cameras are derived using epipolar constraints, and a position of each corresponding point in three-dimensional space is determined through triangulation based on the positions and attitudes of the cameras. In the present disclosure, these points in three-dimensional space will also be referred to as three-dimensional points. That is, a three-dimensional point corresponding to each corresponding point is determined. The entirety of a three-dimensional point cloud determined as described above is then optimized through bundle adjustment.

In MVS, for example, denser corresponding points are searched for using the three-dimensional point cloud derived as described above, and three-dimensional points are added.

As described above, since global optimization calculation for minimizing errors, that is, bundle adjustment, is performed in photogrammetry, a highly accurate result can be obtained, but a calculation load is large. In addition, since photogrammetry is based on geometric calculation rather than physical measurement, a more accurate model can be restored by using higher resolution images in principle.

Next, real-time 3D modeling will be described.

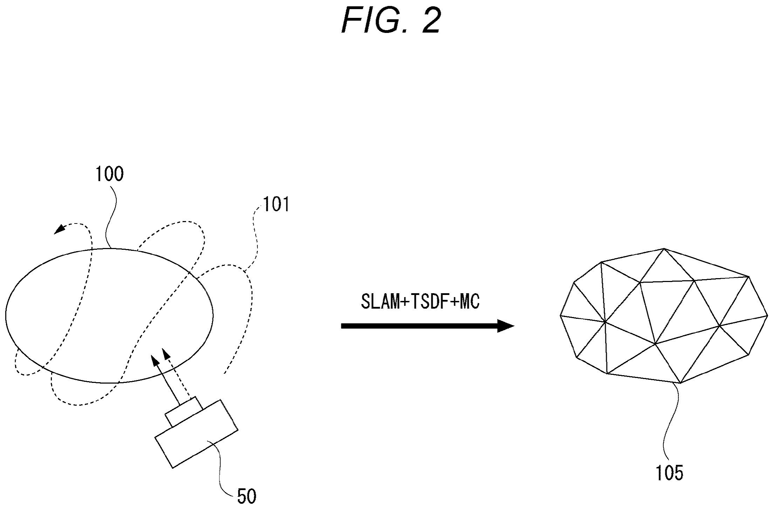

As a 3D modeling method different from the photogrammetry, there is a method called real-time 3D modeling, in which 3D data is generated instantaneously (in real-time) on the basis of information such as captured images, attitude information, and depth. In the case of this method, for example, as illustrated in Fig. 2, images of the 3D object 100 are captured while moving a camera 50 around the 3D object 100 as indicated by a dotted line 101. The camera 50 includes not only an image sensor but also a light detection and ranging (lidar) scanner (direct time of flight (dToF) module), and obtains a captured image while detecting a depth (a distance to a subject).

Miniaturization and functional enhancement of dToF modules have progressed in recent years, and a relatively long-distance depth (for example, about 5 m) can be accurately measured both indoors and outdoors. As a result, it has become easy to experience real-time modeling and capturing at the consumer level.

The camera 50 further includes an inertial sensor, and detects inertial information including acceleration and angular velocity of the camera 50.

In real-time 3D modeling, processing for calculating a three-dimensional attitude called simultaneous localization and mapping (SLAM) is performed to generate attitude information indicating a position and an attitude of the camera 50. In addition, a truncated signed distance function (TSDF) is updated using the attitude information and the depth, and a 3D model 105 (mesh and texture) is generated through processing called marching cubes (MC).

In SLAM, for example, the position and attitude of the camera 50 are estimated on the basis of a captured image and inertial information (self-localization).

In the updating of the TSDF, the depth and voxels are associated with each other, and volume is detected.

In MC, isosurfaces are calculated using adjacent voxels. With SLAM real-time attitude information, it is possible to detect the volume of voxels without using a point cloud by superimposing a plurality of frames of depth (how far light beams have reached) upon one another. Voxel representation allows estimation of a viewpoint (missing viewpoint) that is overshadowed and from which an image needs to be captured. As a result, a perforated structure or a protruding structure of a 3D object can be detected.

In addition, as another 3D modeling method, there is also a method collectively referred to as neural rendering. This is a method in which neural fields are configured on the basis of attitudes of captured images and the captured images to generate an image from a desired viewpoint or a three-dimensional model, and, for example, neural radiance fields (NeRF) and the like have been proposed.

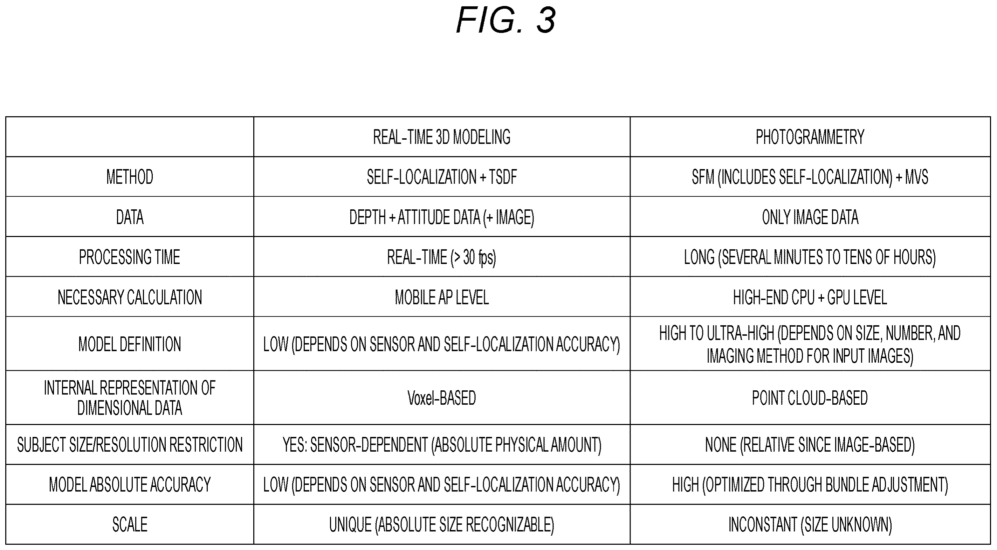

Each of these 3D modeling methods has different characteristics, and no single method excels in all respects. Fig. 3 illustrates comparison between characteristics of photogrammetry and characteristics of real-time 3D modeling. As can be seen from the comparison of methods illustrated in Fig. 3, photogrammetry uses SfM (including self-localization) and MVS, whereas real-time 3D modeling uses self-localization (SLAM) and the TSDF. In addition, as can be seen from comparison of data to be used, photogrammetry uses only image data, whereas real-time 3D modeling uses depth and attitude data in addition to image data. In addition, as can be seen from comparison of processing time, photogrammetry requires a long time ranging from several minutes to tens of hours, whereas real-time 3D modeling allows near-instantaneous processing such as 30 fps (frames/sec).

In addition, as can be seen from comparison of required computational power, photogrammetry requires computational power at a high-end central processing unit (CPU) and graphics processing unit (GPU) level, whereas real-time 3D modeling requires computational power at a mobile application processor (AP) level. In addition, as can be seen from comparison of definition of models to be generated, photogrammetry results in relatively high definition although the definition depends on resolution, the number, and an imaging method of captured images and the like, whereas real-time 3D modeling results in relatively low definition although the definition depends on the depth and accuracy of self-localization.

In addition, with respect to internal representation of three-dimensional data to be generated, photogrammetry is point cloud-based, whereas real-time 3D modeling is voxel-based. In addition, photogrammetry has no constraints in terms of subject size and resolution, whereas real-time 3D modeling depends on the sensor. In addition, as can be seen from comparison of absolute accuracy of models, photogrammetry results in relatively high absolute accuracy because of the optimization through bundle adjustment, whereas real-time 3D modeling results in relatively low absolute accuracy although the absolute accuracy depends on the sensor and the accuracy of self-localization. In addition, as can be seen from comparison of scales, photogrammetry has an inconstant scale (size is unknown), whereas real-time 3D modeling has a unique scale (absolute size is known).

There are such differences in characteristics, for example, between photogrammetry and real-time 3D modeling. That is, it is possible to reduce the amount of work and processing of 3D modeling in a case where real-time 3D modeling is employed compared to a case where photogrammetry or neural rendering is employed. It is, however, possible to generate a more accurate 3D model in a case where photogrammetry or neural rendering is employed than in a case where real-time 3D modeling is employed.

In order to obtain more accurate 3D data, therefore, photogrammetry or neural rendering may be employed. In this case as well, however, it is desirable that the amount of work and processing of 3D modeling be as small as possible. In order to reduce the amount of work and processing of 3D modeling, it is required that a 3D model as accurate as possible be generated while minimizing the number of times of imaging.

For example, in a case where captured images necessary for 3D modeling cannot be obtained, accuracy of a 3D model to be generated might decrease. Conversely, if an excessive number of captured images are obtained in order to avoid a shortage, imaging frequency increases unnecessarily, and the user's workload increases accordingly. In addition, since 3D modeling is performed using unnecessary captured images in this case, the amount of processing increases unnecessarily.

That is, in order to obtain more accurate 3D data with a smaller amount of operation and processing, it is required to capture images of a 3D object at more appropriate positions and attitudes. In each of the 3D modeling methods described above, however, it is difficult for an imaging operator to identify appropriate positions and attitudes for imaging.

For example, since photogrammetry takes time for 3D modeling processing, it is difficult for the imaging operator to instantaneously review a 3D modeling result during imaging. It is therefore difficult for the imaging operator to identify, during imaging, appropriate positions and attitudes for the imaging. Consequently, for example, there might not be a sufficient number of images captured at appropriate positions and attitudes, and accuracy of 3D data obtained through photogrammetry might decrease. In addition, in a case where imaging is performed excessively and haphazardly at many positions and attitudes in order to avoid a shortage of images captured at appropriate positions and attitudes, there is a possibility that not only the user's amount of operation increases, but also the number of captured images increases unnecessarily, and a load (the amount of processing, processing time, and the like) of 3D modeling processing increases unnecessarily.

In the present embodiment, therefore, 3D modeling is performed twice, and imaging for the second 3D modeling is guided and controlled using a result of the first 3D modeling.

For example, the first 3D modeling is performed as real-time 3D modeling, and a first 3D model representing a three-dimensional shape of a 3D object is generated. Guiding of the user who is the imaging operator and imaging control for the second 3D modeling, that is, for example, photogrammetry or neural rendering, are performed using information based on the real-time 3D modeling. That is, the user is guided in such a way as to be able to perform imaging for the second 3D modeling processing at more appropriate positions and attitudes. Furthermore, in the case of the present embodiment, it is not necessary for the user to perform shutter operations, and imaging recording (image obtaining processing) is automatically performed at an optimal timing.

The imaging for the first 3D modeling and the imaging (image obtaining processing) for the second 3D modeling may be performed simultaneously, or the imaging for the first 3D modeling may be performed in advance, and then the imaging for the second 3D modeling (image obtaining processing) may be performed.

### <2. Device Configurations>

An imaging device 51 according to an embodiment will be described.

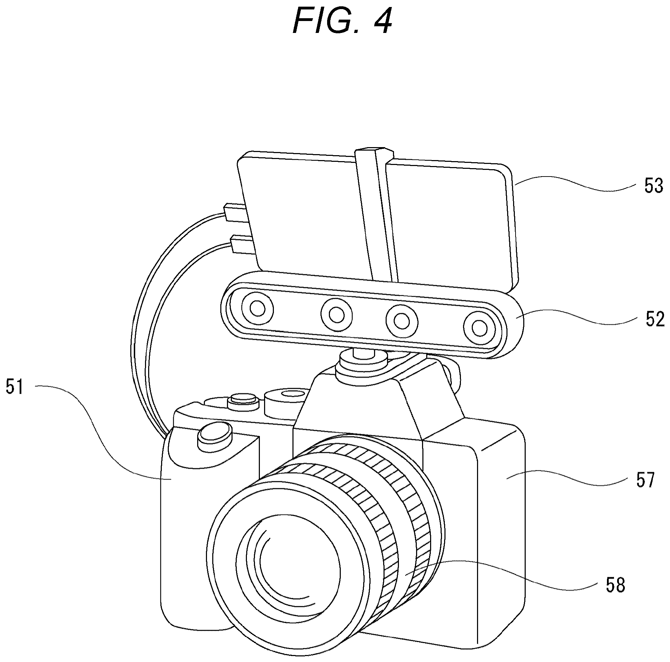

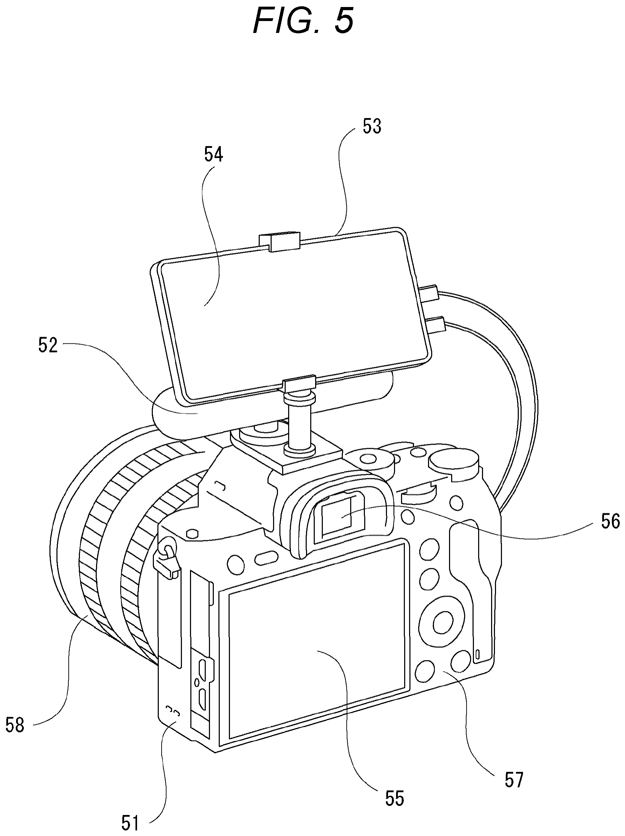

Figs. 4 and 5 illustrate an example of appearance of the imaging device 51. In this example, the imaging device 51 is assumed to be a camera in which a lens barrel 58 is attached to a main body 57. The lens barrel 58 may be of an interchangeable lens type or may be a non-detachable lens provided integrally with the main body 57.

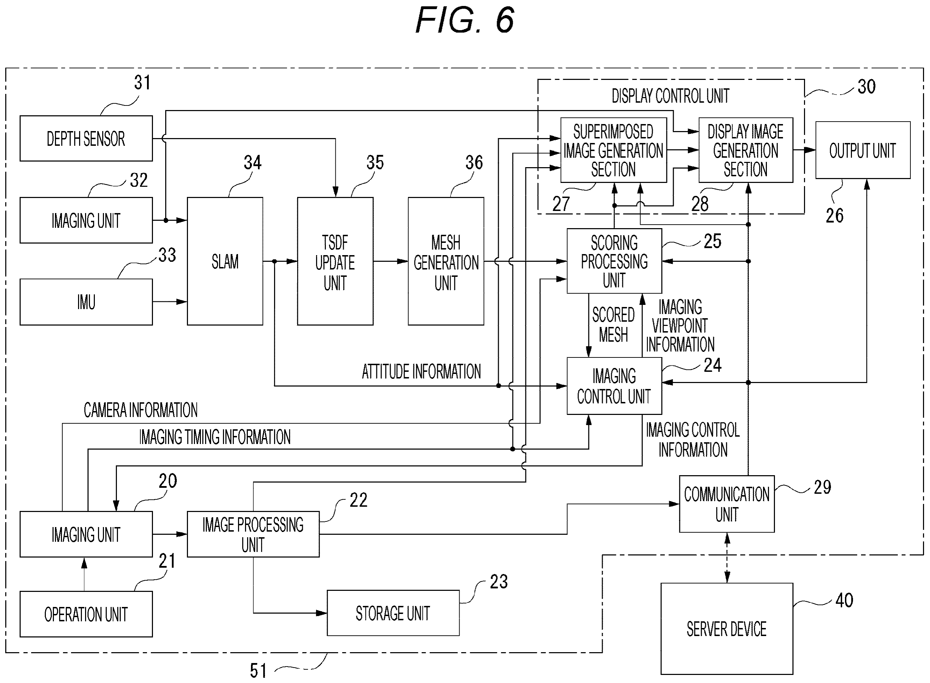

Light incident through the lens barrel 58 forms an image, that is, is converted into electricity, in an image sensor provided in the main body 57, and processed as a captured image. The image sensor here constitutes an imaging unit 20 in Fig. 6 described later.

The main body 57 and the lens barrel 58 are provided with various controllers for the user to perform operations, a display 55 that displays an imaging monitor image, various icons, menus, and the like, a viewfinder 56, and the like.

A sensor unit 52 is attached to the main body 57. The sensor unit 52 is a unit provided with, for example, an image sensor constituting an imaging unit 32 illustrated in Fig. 6, a depth sensor 31, an inertial measurement unit (IMU) 33, and the like.

With the sensor unit 52, a captured image is obtained by the image sensor, distance information with respect to a subject is obtained by the depth sensor 31, and inertial information regarding the imaging device 51 is obtained by the IMU 33.

In addition, an interface device 53 is attached to the main body 57. For example, an information processing device such as a smartphone may be used as the interface device 53 in order to cooperate with the imaging device 51. A display 54 of the interface device 53 displays various types of information for the user. For example, an imaging monitor image (through image) of a subject is displayed. In addition, the display 54 also displays a guide of an imaging operation for the user. In addition, the display 54 is a touch panel, and receives the user's operation inputs.

Note that although a smartphone or the like is used as the interface device 53 in Figs. 4 and 5, the display 55 of the main body 57 may display various types of information instead of the interface device 53 and detect operation inputs, and a separate interface device 53 may be omitted.

In addition, an example in which a camera including the main body 57 and the lens barrel 58 as illustrated in the drawing is not used is also conceivable. For example, since an information processing device such as a smartphone often has an imaging function and also often has a distance measuring function and an inertial sensor function, a smartphone, a tablet device, or the like may be used alone as the imaging device 51 in the present embodiment.

In addition, although the sensor unit 52 is illustrated, the image sensor constituting the imaging unit 32, the depth sensor 31, the IMU 33, and the like may be built in the main body 57 or may be built in the interface device 53. In addition, in a case where the information processing device such as a smartphone is the imaging device 51, the image sensor constituting the imaging unit 32, the depth sensor 31, and the IMU 33 may be built in the information processing device.

In addition, a display device for displaying images and the like may be an external device, instead. For example, display data may be transmitted from the imaging device 51 by short-distance wireless communication, wired communication, or the like, and displayed on a monitor display device, a head-mounted display, a display of another information processing device, or the like.

That is, the imaging device 51 according to the embodiment is a device capable of capturing images in any form, and only needs to have a control function of executing an interface based on image display or the like on an integrated or separate screen or the like.

Fig. 6 illustrates an example of internal configuration of the imaging device 51. Note that the illustrated components are provided in any of the sensor unit 52, the main body 57, and the interface device 53 in the case of the example in Fig. 5, for example, but may be provided at appropriate locations as the entire imaging device 51.

In addition, the imaging device 51 may include a device or a processing unit not illustrated as a block in Fig. 6, or there may be a flow of data or processing not illustrated as an arrow or the like.

The imaging device 51 includes, for example, the depth sensor 31, the imaging unit 32, the IMU 33, an SLAM 34, a TSDF update unit 35, and a mesh generation unit 36 as components for performing real-time 3D modeling as the first 3D modeling.

The imaging device 51 also includes the imaging unit 20, an operation unit 21, an image processing unit 22, a storage unit 23, and a communication unit 29 as components for performing the image obtaining processing for the second 3D modeling.

Note that, in this example, it is not the imaging device 51 but a server device 40 that performs, for example, photogrammetry as the second 3D modeling. The server device 40 is, for example, a cloud server. The imaging device 51 uploads captured image data obtained by the imaging unit 20 to the server device 40 via network communication.

In addition, the imaging device 51 includes a scoring processing unit 25, an imaging control unit 24, a display control unit 30, and an output unit 26 as components for various types of control and guides for the user. The display control unit 30 includes a superimposed image generation section 27 and a display image generation section 28.

In the imaging device 51, the depth sensor 31 includes a lidar sensor (dToF module) or the like, detects a depth to a subject, and supplies the depth to the TSDF update unit 35.

The imaging unit 32 includes an image sensor and captures images of the subject to generate captured images. The images captured by the imaging unit 32 are used for the first real-time 3D modeling. The imaging unit 32, therefore, supplies captured image data to the SLAM 34.

The IMU 33 detects inertial information (acceleration and angular velocity) regarding the imaging device 51 and supplies the inertial information to the SLAM 34.

The SLAM 34 performs self-localization on the basis of the supplied captured images and inertial information, and generates attitude information indicating a position and an attitude of the imaging device 51. The SLAM 34 supplies the generated attitude information to the TSDF update unit 35, the imaging control unit 24, and the superimposed image generation section 27 of the display control unit 30.

The TSDF update unit 35 updates the TSDF on the basis of the attitude information and the depth, and supplies the updated TSDF to the mesh generation unit 36.

The mesh generation unit 36 generates a mesh and texture using the updated TSDF. The mesh generation unit 36 supplies the mesh and the texture to the scoring processing unit 25 as a first 3D data (first three-dimensional shape information).

The scoring processing unit 25 performs scoring processing on the basis of supplied first 3D data and imaging viewpoint information supplied from the imaging control unit 24, that is, information indicating positions and attitudes at which the imaging (image obtaining processing) for the second 3D modeling has been performed.

This scoring process is processing for evaluating, using the three-dimensional shape information based on the first 3D model, accuracy of a second 3D model generated by the server device 40 using images captured by the imaging unit 20 so far and generating a scoring result.

For example, the scoring processing unit 25 may generate a scoring result for each of local portions of the first three-dimensional shape information on the basis of the first three-dimensional shape information and positions and attitudes for imaging performed by the imaging unit 20 so far. For example, the scoring processing unit 25 may generate a scoring result for each of polygons of a mesh. The scoring processing unit 25 supplies the scoring results to the imaging control unit 24 and the superimposed image generation section 27.

Note that the scoring processing unit 25 may obtain camera information regarding the imaging unit 20 and generate a scoring result on the basis of the camera information.

The imaging control unit 24 performs imaging control processing as the image obtaining processing by the imaging unit 20.

For example, the imaging control unit 24 sets a portion of a 3D object that is a subject where the image obtaining processing is to be performed on the basis of the first three-dimensional shape information. A timing at which the imaging unit 20 can appropriately capture an image of the portion where the image obtaining processing is to be performed is then determined from the attitude information regarding the imaging device 51, shutter control of the imaging unit 20 is performed at the timing to perform imaging as the image obtaining processing.

In addition, the imaging control unit 24 supplies imaging viewpoint information indicating a position and an attitude for the performed imaging to the scoring processing unit 25.

In addition, the imaging control unit 24 supplies, to the display control unit 30, information necessary for guiding the user to move the imaging device 51 to positions at which the imaging is to be performed.

In order to perform 3D modeling based on photogrammetry with a certain quality, it is necessary to perform imaging while facing directly toward an imaging plane of the subject from a certain distance. In addition, it is necessary to change an imaging interval depending on sizes of front and rear common visual fields due to unevenness of a surface.

Therefore, the imaging control unit 24 sets recommended imaging positions with respect to the 3D object such that captured images can be obtained in a state of overlapping each other with an appropriate overlap ratio in accordance with a shape, unevenness, and the like of each portion of the 3D object. The appropriate overlap ratio is set to, for example, about 25% to 75%. The amount of information increases as the overlap ratio increases. In addition, the imaging control unit 24 can also use a scoring result for setting appropriate recommended imaging positions. For example, the imaging positions are densely set at a position having a low evaluation.

The imaging control unit 24 thus sets a plurality of recommended imaging positions (points at which the image obtaining processing is to be performed) for the 3D object that is the subject, but the user cannot recognize where to image only on the basis of the setting. Therefore, the imaging control unit 24 supplies information regarding the set recommended imaging positions and the like to the display control unit 30 so that the display control unit 30 can display guides and the like for the user.

The imaging unit 20 includes an image sensor and captures images of the subject to generate captured images. As described above, the imaging unit 20 captures images as the image obtaining processing through the shutter control by the imaging control unit 24, and supplies image data to the image processing unit 22.

The operation unit 21 is controllers operable by the user, and includes a shutter controller, a zoom controller, a focus controller, and other controllers for various camera operations. The imaging unit 20 may perform imaging in accordance with a shutter operation instruction from the user supplied from the operation unit 21 to generate a captured image.

In addition, the imaging unit 20 may supply the camera information, that is, internal parameters, external parameters, field-of-view information, and the like regarding the imaging unit 20 to the scoring processing unit 25.

In addition, the imaging unit 20 may supply, to the imaging control unit 24, imaging timing information indicating an imaging timing not based on the shutter control by the imaging control unit 24, such as the user's shutter operation using the operation unit 21.

The image processing unit 22 performs predetermined image processing on captured image data generated by the imaging unit 20. This image processing may have any content. The image processing unit 22 performs, for example, signal processing such as color separation processing, color conversion processing, defect correction, noise reduction, AWB, and gamma correction on the captured image data. In addition, the image processing unit 22 performs encoding processing on the captured image data.

The storage unit 23 stores supplied encoded data in the storage medium.

The communication unit 29 transmits the supplied encoded data to another information processing device (for example, a server or the like). It is assumed in this example that the communication unit 29 sequentially uploads the captured image data to the server device 40.

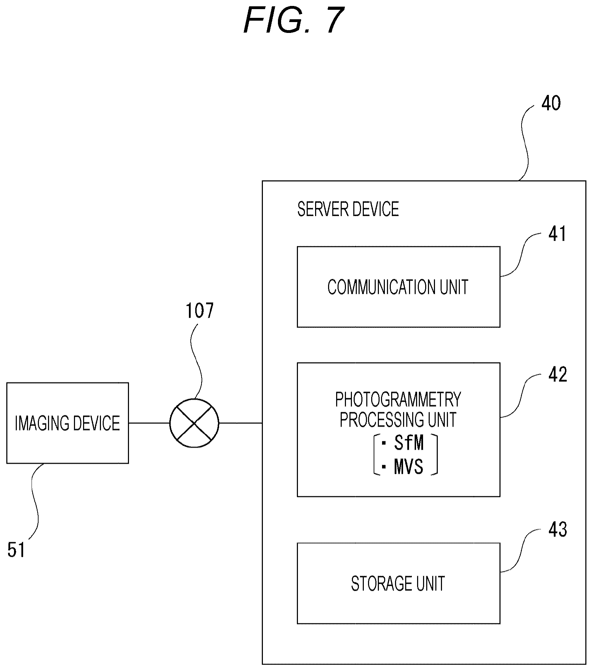

As illustrated in Fig. 7, the imaging device 51 and the server device 40 perform data communication with each other over a network 107. The captured image data obtained by the imaging unit 20 performing imaging as the image obtaining processing is uploaded to the server device 40, and the server device 40 performs the second 3D modeling.

Therefore, the server device 40 includes components as a communication unit 41, a photogrammetry processing unit 42, and a storage unit 43.

The communication unit 41 sequentially receives captured image data uploaded from the imaging device 51. In addition, the communication unit 41 transmits information regarding a 3D model generated by the photogrammetry processing unit 42 to the imaging device 51.

For example, the storage unit 43 saves captured image data uploaded from the imaging device 51 and saves a 3D model generated by the photogrammetry processing unit 42.

The photogrammetry processing unit 42 performs 3D modeling on the uploaded captured image data. For example, the photogrammetry processing unit 42 generates a second 3D model (second three-dimensional shape information) by performing processing such as SfM or MVS on the basis of captured images generated by the imaging unit 20.

In the processing of SfM, for example, corresponding points are searched for between captured images, positions and attitudes of the imaging device 51 are derived using epipolar constraints, a position of each corresponding point in three-dimensional space is determined through triangulation based on the positions and attitudes of the imaging device 51, and the entirety of a determined three-dimensional point cloud is optimized through bundle adjustment.

In the processing of MVS, for example, dense corresponding points are further searched for using the three-dimensional point cloud, three-dimensional points are added, and meshing and texturing are further performed as post-processing to generate a second 3D model.

The photogrammetry processing unit 42 encodes the 3D model generated in this manner, supplies the 3D model to the storage unit 43, and stores the 3D model in the storage medium.

In addition, the photogrammetry processing unit 42 supplies encoded data regarding the 3D model to the communication unit 41 to transmit the encoded data to the imaging device 51.

Note that, after a required number of captured images is obtained, the photogrammetry processing unit 42 performs photogrammetry processing to generate a 3D model, but performs simple 3D modeling to generate a 3D model as a preview image while the imaging device 51 is performing the imaging operation.

For example, the server device 40 performs 3D modeling for preview each time a captured image is uploaded from the imaging device 51 in order to generate and update a 3D model. The 3D model at each time point is transmitted to the imaging device 51.

Note that although the server device 40 includes the photogrammetry processing unit 42, the server device 40 may include a neural rendering processing unit and generate the second 3D model through neural rendering.

In the imaging device 51 of Fig. 6, the communication unit 29 receives the 3D model for preview during the imaging operation. The received 3D model for preview is supplied to the scoring processing unit 25 and the display control unit 30.

The display control unit 30 controls display of the imaging monitor image and display including guides regarding the user's imaging operation.

The superimposed image generation section 27 in the display control unit 30 generates an image to be superimposed and displayed on the imaging monitor image of the subject, that is, for example, images of target indicators 1, a self-indicator 2, and the like described later. In this case, the superimposed image generation section 27 also sets a mode (a size, a shape, and a color) of the image to be superimposed on the imaging monitor image while referring to recommended imaging positions set by the imaging control unit 24, information such as attitude information and imaging positions of the imaging device 51, shutter control timings of the imaging control unit 24, and the like, and generates image data to be superimposed and displayed.

The display image generation section 28 in the display control unit 30 generates display image data by combining the image generated by the superimposed image generation section 27 in such a way as to be superimposed on the imaging monitor image of the subject. For example, the display image generation section 28 generates display image data for displaying the target indicators 1, which will be described later, in correspondence with the recommended imaging positions set by the imaging control unit 24. In addition, the display image generation section 28 can include a 3D model from the server device 40 or thumbnail data regarding the 3D model in the display image data. In addition, the display image generation section 28 might set the display mode of an image to be superimposed in accordance with a scoring result from the scoring processing unit 25.

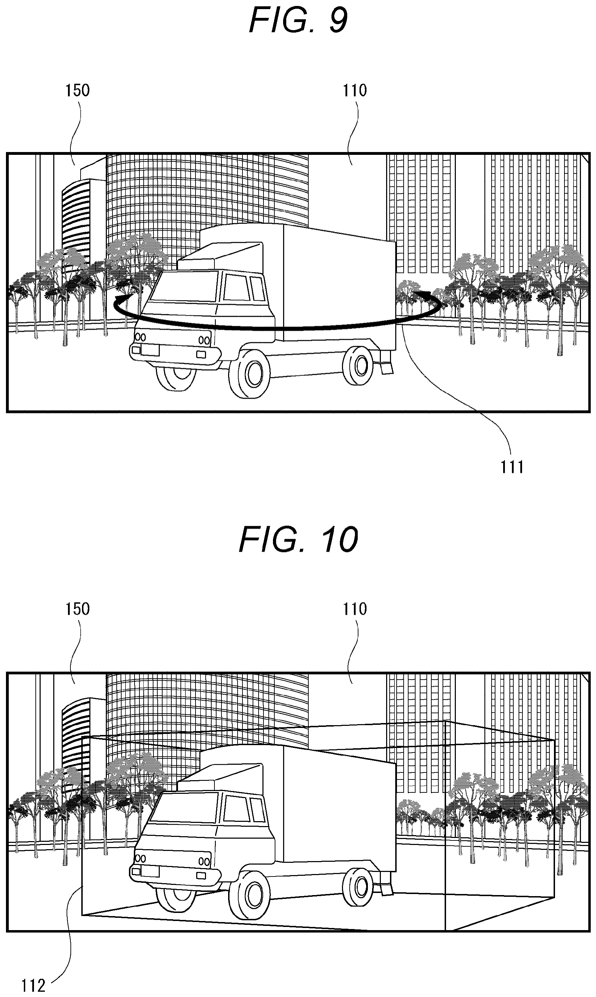

The output unit 26 includes, for example, display devices as the displays 54 and 55 and an audio output device. The display devices of the output unit 26 display an imaging monitor image of a subject and images for various guides under the control of the display control unit 30. Specifically, screens illustrated in Fig. 9 and subsequent drawings are displayed.

In addition, the audio output device in the output unit 26 outputs predetermined sounds in accordance with the shutter control timing of the imaging control unit 24 and the like.

The imaging device 51 having such a configuration captures images of a 3D object at more appropriate positions and attitudes to enable the server device 40 to perform 3D modeling using the captured images. In particular, the imaging device 51 outputs guide display and sounds so that the user can perform the imaging operation at more appropriate positions and attitudes. By using the imaging device 51, therefore, it is possible generate more accurate 3D data while suppressing an increase in the load of 3D modeling.

Note that although the server device 40 performs the second 3D modeling in the above example, a function equivalent to, for example, that of the photogrammetry processing unit 42 may be provided inside the imaging device 51, and the second 3D modeling may be performed, instead.

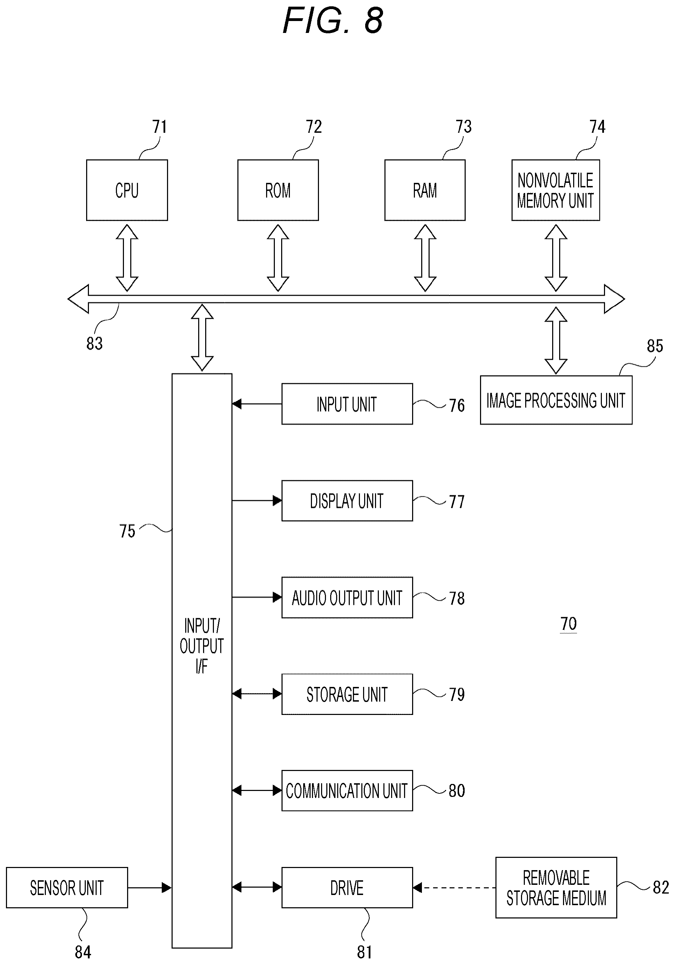

Here, an information processing device that can be configured as the imaging device 51 or the server device 40 will be described. For example, a portable information processing device such as a smartphone or a tablet terminal can be used as the imaging device 51. The server device 40 is also implemented as an information processing device. Fig. 8 illustrates the configuration of the information processing device in those cases.

An information processing device 70 is a device capable of performing information processing, particularly image processing, such as a computer device. Specifically, a personal computer, a workstation, a portable terminal device such as a smartphone or a tablet, a video editing device, or the like is assumed as the information processing device 70. Alternatively, the information processing device 70 may be a computer device configured as a server device or a calculation device in cloud computing.

A central processing unit (CPU) 71 of the information processing device 70 illustrated in Fig. 8 performs various types of processing in accordance with a program stored in a nonvolatile memory unit 74 such as a read only memory (ROM) 72 or, for example, an electrically erasable programmable read-only memory (EEP-ROM) or a program loaded from a storage unit 79 into a random access memory (RAM) 73. The RAM 73 also stores, as appropriate, data and the like necessary for the CPU 71 to perform the various types of processing.

An image processing unit 85 is configured as a processor that performs various types of image processing. For example, the image processing unit 85 is a processor capable of performing any one or more of 3D modeling processing, rendering, database processing, image processing on captured images including color/luminance adjusting processing, encoding processing, decoding processing, image editing processing, image analysis/detection processing, and the like.

The image processing unit 85 can be implemented as, for example, a CPU separate from the CPU 71, a graphics processing unit (GPU), general-purpose computing on graphics processing units (GPGPU), an artificial intelligence (AI) processor, or the like.

Note that the image processing unit 85 may be provided as a function in the CPU 71.

The CPU 71, the ROM 72, the RAM 73, the nonvolatile memory unit 74, and the image processing unit 85 are connected to one another via a bus 83. Furthermore, an input/output interface 75 is also connected to the bus 83.

An input unit 76 including a controller or an operation device is connected to the input/output interface 75. For example, as the input unit 76, various controllers and operation devices such as a keyboard, a mouse, keys, a trackball, a dial, a touch panel, a touch pad, and a remote controller are assumed.

A user operation is detected by the input unit 76, and a signal corresponding to the input operation is interpreted by the CPU 71.

A microphone is also assumed as the input unit 76. It is also possible to input voices uttered by the user as operation information.

Furthermore, a display unit 77 including a liquid crystal display (LCD), an organic electro-luminescence (EL) panel, or the like and an audio output unit 78 including a speaker or the like are integrally or separately connected to the input/output interface 75.

The display unit 77 performs various types of display. The display unit 77 is implemented as, for example, a display device provided in a housing of the information processing device 70, a separate display device connected to the information processing device 70, or the like.

The display unit 77 displays various images, operation menus, icons, messages, and the like, that is, a graphical user interface (GUI), on a display screen on the basis of instruction from the CPU 71.

The storage unit 79 including a hard disk drive (HDD), a solid state drive (SSD), or the like or a communication unit 80 might be connected to the input/output interface 75.

The storage unit 79 can store various types of data and programs. A database can be configured in the storage unit 79.

The communication unit 80 performs communication processing via a transmission path such as the Internet, wired/wireless communication with various devices including an external DB, an editing device, and an information processing device, and communication based bus communication or the like.

A drive 81 is also connected to the input/output interface 75 as necessary, and a removable storage medium 82 such as a magnetic disk, an optical disc, a magneto-optical disk, or a semiconductor memory is appropriately inserted.

The drive 81 enables reading image data, various computer programs, and the like from the removable storage medium 82. The read data is stored in the storage unit 79, and images and sounds included in the data are output from the display unit 77 and the audio output unit 78. In addition, the computer programs and the like read from the removable storage medium 82 are installed in the storage unit 79 as necessary.

In the case of the information processing device 70 used as the imaging device 51, a sensor unit 84 is included. The sensor unit 84 has a sensor configuration necessary as the depth sensor 31, the imaging unit 32, the IMU 33, and the imaging unit 20 described with reference to Fig. 6. For example, the sensor unit 84 includes a lidar sensor, a plurality of image sensors, an angular velocity sensor, an acceleration sensor, and the like.

In the information processing device 70, for example, software for the processing in the present embodiment can be installed through network communication by the communication unit 80 or the removable storage medium 82. Alternatively, the software may be stored in advance in the ROM 72, the storage unit 79, or the like.

### <3. User Interface Screen>

A user interface screen capable of guiding the user through the imaging operation for 3D modeling will be described below while taking a specific example.

In order to perform imaging with a certain quality in photogrammetry as described above, it is necessary to perform imaging while facing directly toward an imaging plane of a subject from a certain distance. In addition, it is necessary to change an imaging interval depending on sizes of front and rear common visual fields due to unevenness of a surface. It is difficult, however, for the user who is a camera operator to grasp this at a site of imaging. The present embodiment, therefore, provides a user interface that guides the user such that the user can perform the imaging operation smoothly while intuitively maintaining an appropriate positional relationship with a subject.

In addition, in the imaging device 51 according to the present embodiment, the user only needs to move the imaging device 51 around a 3D object without performing shutter operations, and shutter processing as the image obtaining processing by the imaging unit 20 is automatically performed under the control of the imaging control unit 24. In this case, if the user cannot recognize the imaging timing, the user might feel uncomfortable in the operation or feel anxious about whether he/she has been successfully capturing images. Therefore, the shutter timing by the imaging unit 20 is also presented to the user on the user interface.

Examples of screens that will be described hereinafter are images displayed on, for example, the display 54 in Fig. 5. The user performs an imaging operation of moving around a 3D object, which is the subject, while directing an imaging direction of the imaging device 51 toward the 3D object. At this time, the user can proceed with the operation while viewing the following screens displayed on the display 54 of the interface device 53 or the like.

First, a region of interest (ROI) setting screen 110 will be described with reference to Figs. 9, 10, 11, and 12.

The ROI is a subject region to be processed, that is, a focused region. By setting the ROI in advance, it is possible to specify a region to be processed in the subject of the imaging device 51.

This ROI setting need not be performed. By setting the ROI in advance, there is an advantage that the total number of images that will be captured and the like can be predicted and presented to the user, but pre-scanning is required.

A case where 3D modeling is performed for a vehicle (truck) will be described as an example. Fig. 9 illustrates an imaging monitor image 150 in a case where the imaging device 51 sets a truck as a subject. For example, an image captured by the imaging unit 32 is displayed and output on the output unit 26 (the display 54 or the like). Note that, in the following description, the imaging monitor image 150 will be simply referred to as a "monitor image 150".

The user captures the subject using the imaging device 51, views the monitor image 150, and, as indicated by an arrow 111, goes around the truck that is the subject whose images are to be captured. Note that the arrow 111 is added for description and is not displayed as an image, but such display for guiding the movement of the user may be superimposed and displayed on the monitor image 150.

When the user performs a start operation for setting the ROI and moves, the imaging device 51 performs real-time 3D modeling roughly on the basis of information from the depth sensor 31 while capturing images of the subject. At this point in time, it is only sufficient that the user can have a sense of size of the subject.

Fig. 10 illustrates a state in which a region surrounding a periphery of the subject is set on the basis of a result of the pre-scanning. For example, through processing by the display control unit 30, a cube 112 or the like that can surround a real-time 3D modeled range is displayed to present the ROI to the user.

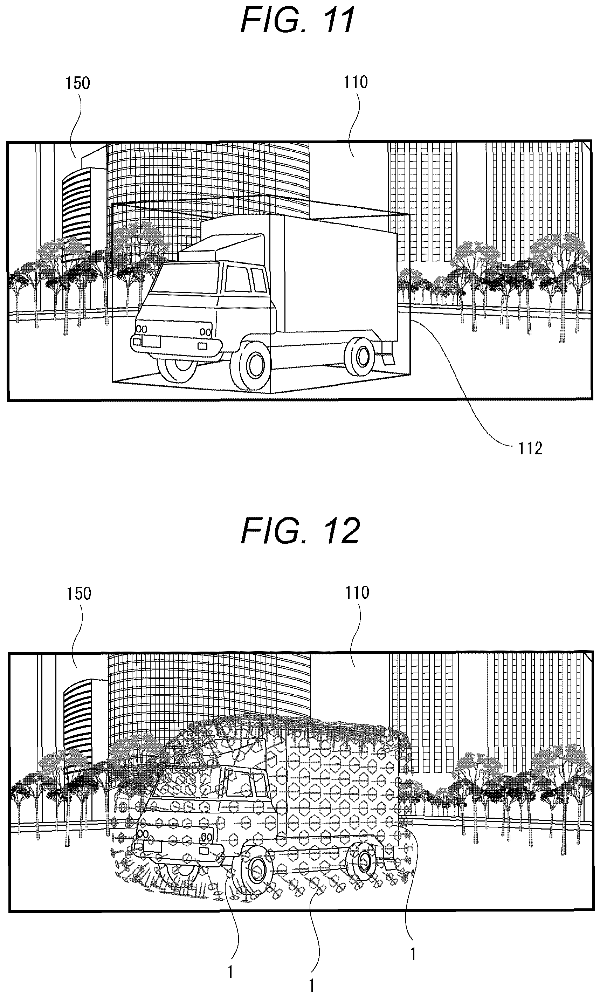

A wall surface of the cube 112 can be moved by a user operation. The user thus adjusts a range to be the ROI. Fig. 11 is an example of minimization of the cube 112 surrounding the real-time 3D modeled range. For example, the range of the cube 112 is set as the ROI.

After setting the ROI in this manner, the imaging control unit 24 sets recommended imaging positions using a result of the real-time 3D modeling. The display control unit 30 superimposes and displays target indicators 1 indicating recommended imaging positions on the monitor image 150 as illustrated in Fig. 12. As a result, the user can check the imaging positions and the total number of images that will be captured.

Note that although the recommended imaging positions are set in the pre-scanning in the above description, the recommended imaging positions may be set simultaneously when actual imaging as the image obtaining process is performed, instead.

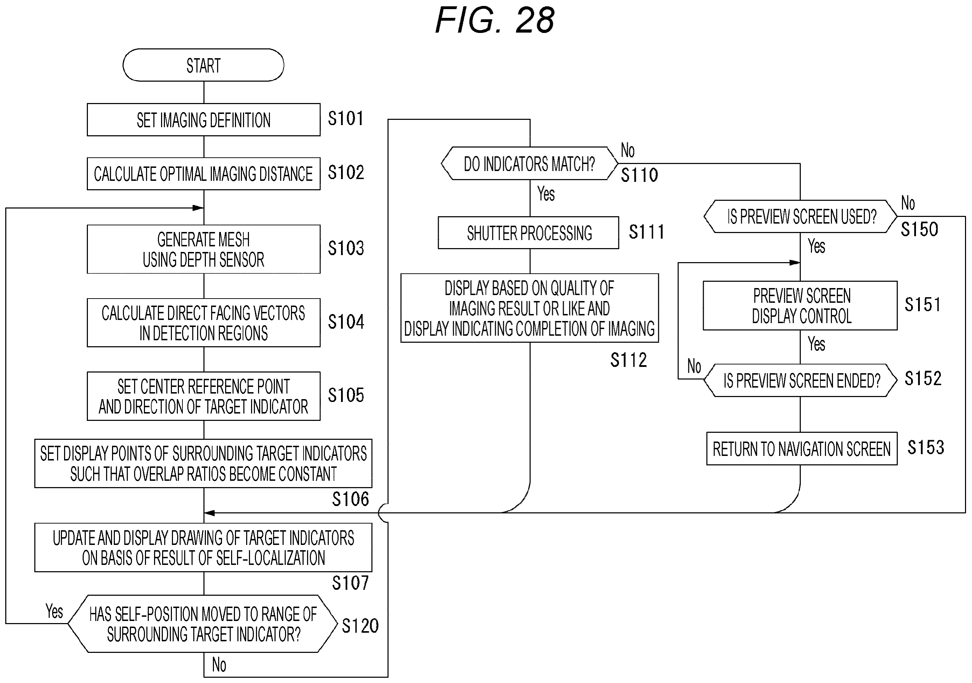

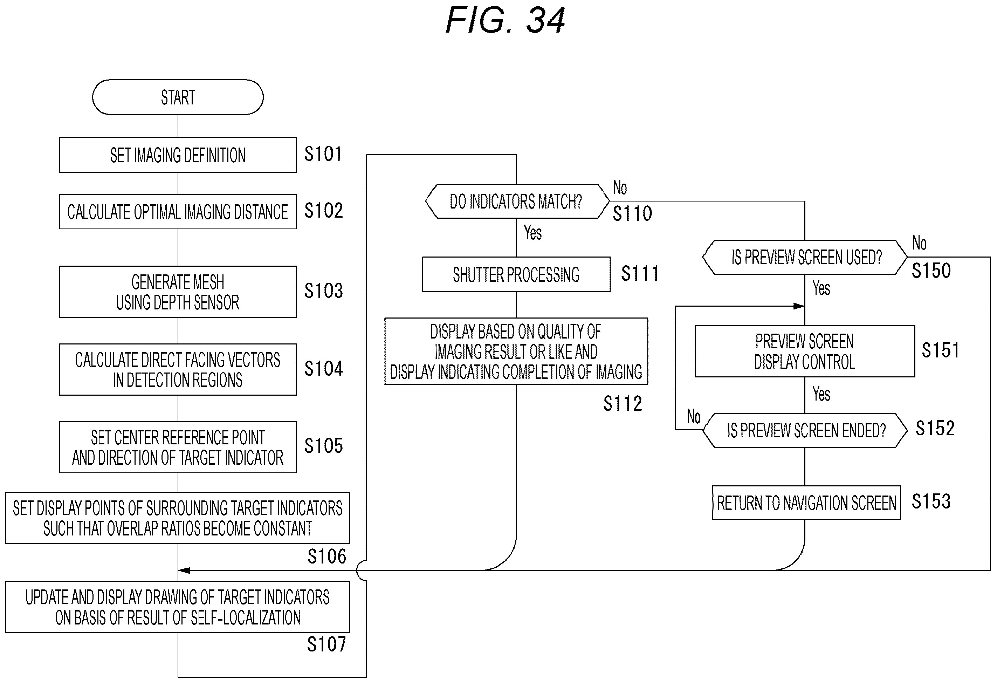

Processing examples in a case where the pre-scanning is performed and a case where the pre-scanning is not performed will be described with reference to Figs. 28 and 34.

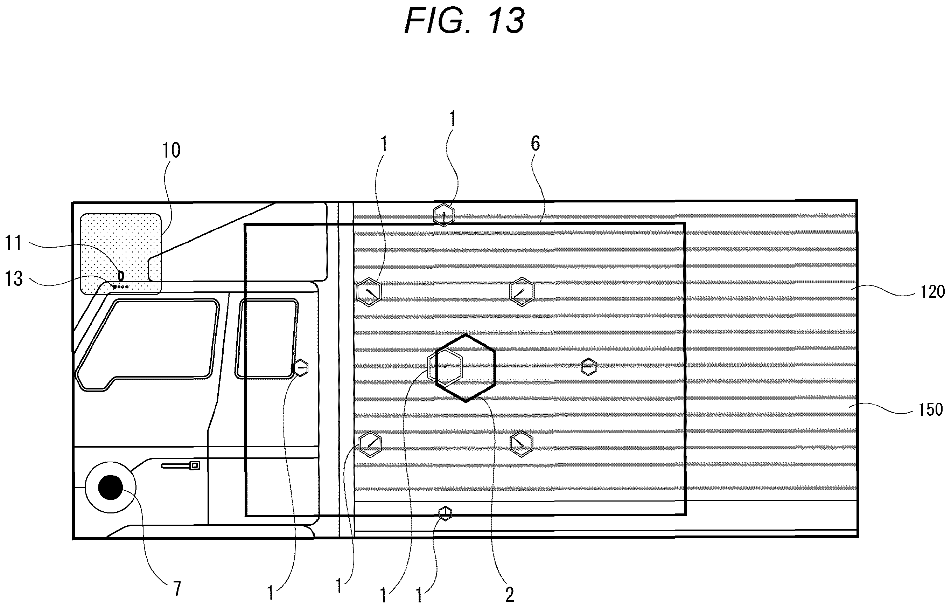

Next, a navigation screen 120 will be described with reference to Figs. 13 to 24. The navigation screen 120 is a screen displayed on the output unit 26 (the display 54 or the like) through processing by the display control unit 30 when the imaging unit 20 performs imaging as the image obtaining processing.

In the present embodiment, by grasping an object shape, for example, the target indicators 1 in Fig. 13 are arranged in such a way as to follow an object surface as indicators that change in size and achieve a predetermined size at a place at a distance from the subject surface where imaging can be performed with a desired quality.

In addition, by arranging indicators to be candidates for next imaging around one indicator and similarly changing the size, the user can smoothly move the imaging device 51 to a next imaging position. In addition, by drawing the indicators in three dimensions so that the shutter processing is performed only when the imaging device 51 faces directly toward the subject, imaging can be stably and appropriately performed.

In addition, by arranging the indicators in accordance with a shape of an object surface, an appropriate imaging interval is presented to the user, and where the next shutter processing is performed is explicitly displayed.

Fig. 13 illustrates an example of the navigation screen 120. In the navigation screen 120, the monitor image 150 of the subject is displayed, and various images are superimposed and displayed on the monitor image 150. The monitor image 150 is an image captured by imaging unit 32.

In the navigation screen 120, target indicators 1 and a self-indicator 2 are displayed for guiding the user to imaging positions. Here, an example in which the target indicators 1 and the self-indicator 2 each have a hexagonal shape is illustrated.

The target indicators 1 and the self-indicator 2 are displayed in different forms, that is, for example, different colors and levels of brightness of frames or different types of frame lines, so that the user can distinguish the target indicators 1 and the self-indicator 2. For example, the target indicators 1 are white, and the self-indicator 2 is yellow.

The target indicators 1 are guide marks indicating recommended imaging positions.

The self-indicator 2 is a guide mark indicating an imaging position of the imaging device 51. The self-indicator 2 in this case indicates the center of an imaging field of view of the imaging unit 20. The displayed monitor image 150 is an image captured by the imaging unit 32, and a field of view of the imaging unit 32 is wider than the field of view of the imaging unit 20. The field of view of the imaging unit 20 that performs imaging as the image obtaining processing is indicated by a field-of-view presentation frame 6 on the monitor image 150. The self-indicator 2 is displayed substantially at the center of the field-of-view presentation frame 6.

Note that in a case where the imaging device 51 is a camera that uses an interchangeable lens as the lens barrel 58, the field of view indicated by the field-of-view presentation frame 6 changes depending on a model of the interchangeable lens.

Since changes in imaging directions of the two imaging units 20 and 32 mounted on the imaging device 51 are the same, when the user moves and the range of the subject displayed as the monitor image 150 changes, the range captured by the imaging unit 20 also changes in a similar manner. Therefore, normally, the user visually recognizes positions of the field-of-view presentation frame 6 and the self-indicator 2 as being fixed at the center on the screen of the display 54.

The target indicators 1 are displayed at corresponding positions on the basis of the set recommended imaging positions. If recommended imaging positions are set through the pre-scanning, target indicators 1 are displayed at the positions. If the pre-scanning is not performed, real-time 3D modeling is simultaneously and continuously performed in a range measured by the depth sensor 31, recommended imaging positions are sequentially set, and the target indicators 1 are displayed at the corresponding positions.

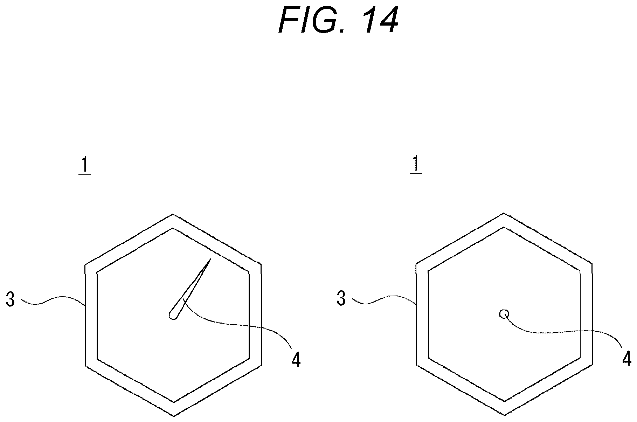

The target indicators 1 are illustrated in Fig. 14 in an enlarged manner.

For example, each target indicator 1 includes a navigation frame 3 and a direction presentation portion 4. Here, the navigation frame 3 has a hexagonal shape, but this is an example.

The direction presentation portion 4 has a needle shape at the center of the navigation frame 3 and indicates a direct facing direction of the imaging device 51 and the subject. A direction of the needle indicates the direct facing direction.

A right side of Fig. 14 illustrates a state in which a tip of the needle is displayed as a dot, that is, indicates that the imaging device 51 and a recommended imaging position of the subject directly face each other. In a left side of Fig. 14, the needle indicates the direct facing direction. That is, it is indicated that the imaging device 51 is not currently directly facing the recommended imaging position.

The user recognizes that the direct facing direction is not established with the needle-shaped direction presentation portion 4, and achieves a direct facing state by moving the imaging device 51 such that the user sees only the tip of the needle.

Note that the above is an example of a mode of the direction presentation portion 4, and another mode may be used, instead, as long as the user can be guided to the direct facing direction.

As illustrated in Fig. 13, the target indicators 1 are displayed for the corresponding recommended imaging positions, but the size thereof is not constant. The size of each target indicator 1 changes in accordance with a distance to the imaging device 51 or the like.

That is, the target indicator 1 changes the size thereof in such a way as to achieve a predetermined size at a place at a distance from the subject surface where imaging can be performed with a desired quality. The target indicator 1 is then displayed in such a way as to follow the subject surface.

As the distance for changing the size, a depth distance (depth) is assumed. In addition, the size of the target indicator 1 may change in accordance with a horizontal distance from the current self-indicator 2.

Note that the user can easily understand an actual distance relationship by making the change in size larger than a change in the actual distance relationship. For example, in a case where the imaging position changes from a first position to a second position and a distance to an optimum imaging position becomes 1/2, the size of the target indicator 1 is made larger than twice. Conversely, in a case where the distance to the optimum imaging position is doubled, the size of the target indicator 1 is made smaller than 1/2. By making the amount of change in size larger than a distance ratio in this manner, it is possible to improve recognizability by the user.

The size of the target indicator 1 is set to be substantially equal to the size of the self-indicator 2, for example, when the imaging device 51 comes at the optimum imaging position. The optimal imaging position is relative to the corresponding recommended imaging position, and refers to a depth position (depth distance) and positions in horizontal and vertical directions, that is, a position in three-dimensional space, for each recommended imaging position.

In a state where the imaging device 51 is too far from a portion of the subject corresponding to a certain target indicator 1 and is not at an optimum imaging position, the size of the target indicator 1 is smaller than that of the self-indicator 2. In a case where the imaging device 51 is closer than the optimum imaging position, for example, it is conceivable to increase the size of the target indicator 1 or split the target indicator 1.

In Fig. 13, the target indicators 1 are relatively small. This is a case where the imaging device 51 is located farther from the subject than the optimum distance is.

In the navigation screen 120, a start button 7 is displayed in a state before a start of the imaging operation. When the user operates the start button 7, imaging for 3D modeling (image obtaining processing) is started.

A simple preview window 10 is displayed in the navigation screen 120. In the simple preview window 10, the number of images 11, a reduced preview 12, an operation presentation portion 13, and the like are displayed.

As the number of images 11, for example, the number of images captured in the image obtaining processing, the number of images uploaded to the server device 40, or the like are displayed. Examples of display content and display modes will be described later. In Fig. 13, for example, the number of images 11 is displayed as the number of images uploaded, but since the imaging has not yet started, the number of images 11 is "0".

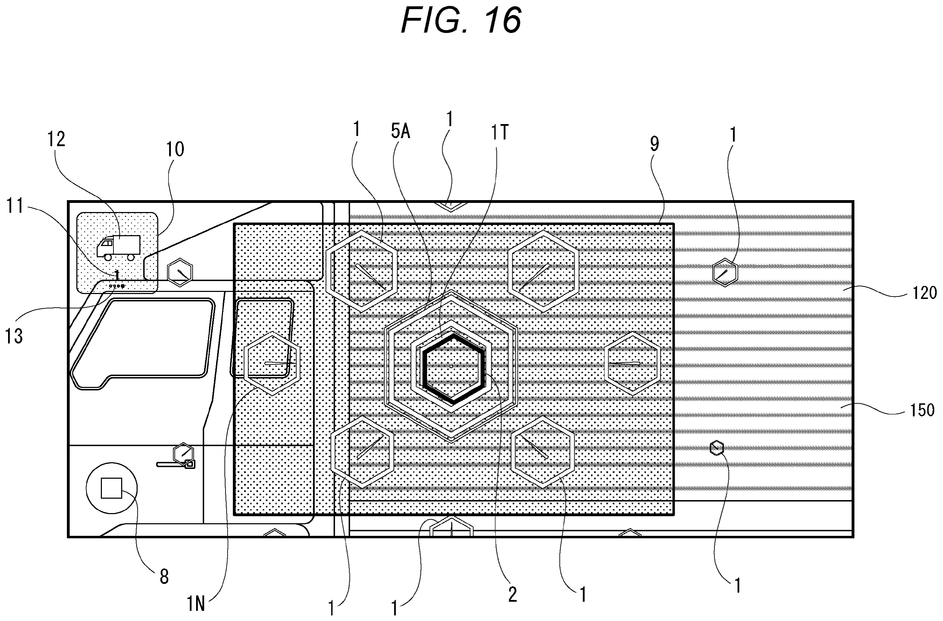

In the reduced preview 12 (see Fig. 16 and the like), a thumbnail image of a 3D model for preview generated in the server device 40 at the time is displayed. At the time of Fig. 13, the reduced preview 12 is not displayed because uploading has not been performed and no 3D model for preview has been generated.

The operation presentation portion 13 performs display in which, for example, several dots move. This display indicates that the imaging device 51 is performing imaging and upload processing as the image obtaining processing, 3D modeling in the server device 40, or the like.

When the start button 7 is operated, imaging processing starts. The user may move around the subject while directing the imaging device 51 toward the subject.

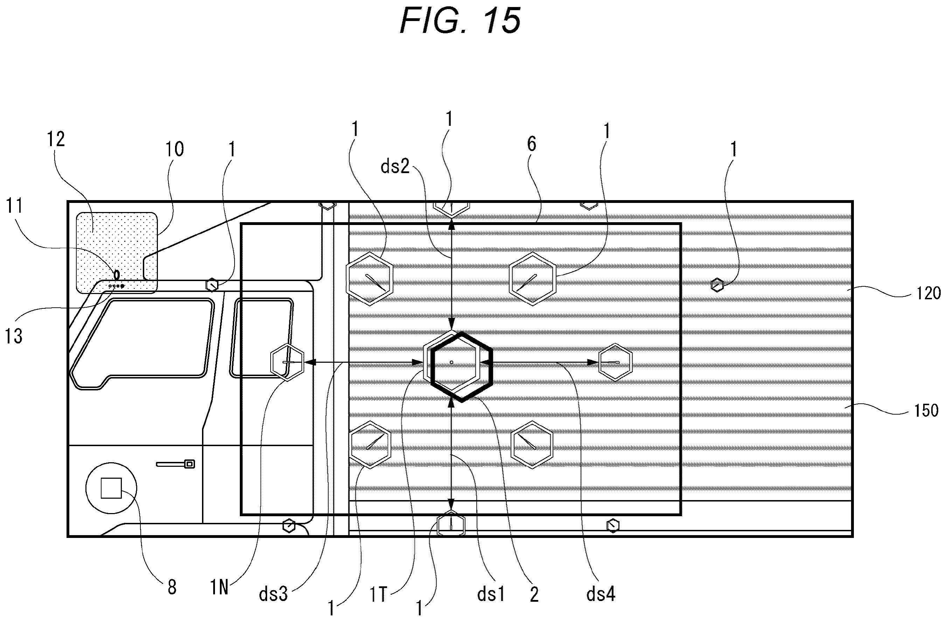

Fig. 15 is a screen in a case where the user moves the imaging device 51 in the depth direction or the horizontal and vertical directions to align the self-indicator 2 with a certain target indicator 1T. Size of the target indicator 1T is increased by approaching an optimum imaging position with respect to a recommended imaging position indicated by the target indicator 1T. In addition, size of other surrounding target indicators 1 also increases in accordance with the distance.

In addition, in the drawing, a direction presentation portion 4 of the target indicator 1T has almost become a dot, indicating that the imaging device 51 is substantially directly facing the recommended imaging position of the target indicator 1T.

As illustrated in Fig. 15 as distances ds1, ds2, ds3, and ds4, distances between the target indicator 1T and surrounding target indicators 1 are set. These distances are set such that an overlap ratio of a captured image to be obtained at each recommended imaging position is optimized. In addition, the distances between the recommended imaging positions are not constant, and are increased or decreased in accordance with a subject shape or the like. For example, the distance is short for a portion having a complicated shape and long for a portion having a planar shape. That is, density of recommended imaging positions is made different for each portion of the subject.

Note that, in the navigation screen 120, a stop button 8 is displayed instead of the start button 7 after the start of imaging. When the stop button 8 is operated, imaging as the image obtaining processing stops.

After the state of Fig. 15, the user adjusts the imaging position such that the size of the target indicator 1T becomes equal to that of the self-indicator 2 and the self-indicator 2 overlaps the target indicator 1T. Although described in detail later, it is sufficient that the self-indicator 2 roughly overlap the target indicator 1T instead of perfect matching.

The imaging control unit 24 can determine whether or not the imaging device 51 has reached the optimum imaging position from a relationship between the position and attitude information of the imaging device 51 and the set recommended imaging position. If determining that the imaging device 51 has reached the optimum imaging position, the imaging control unit 24 causes the imaging unit 20 to perform the shutter processing. The captured image then undergoes predetermined processing, and is uploaded from the communication unit 29 to the server device 40.

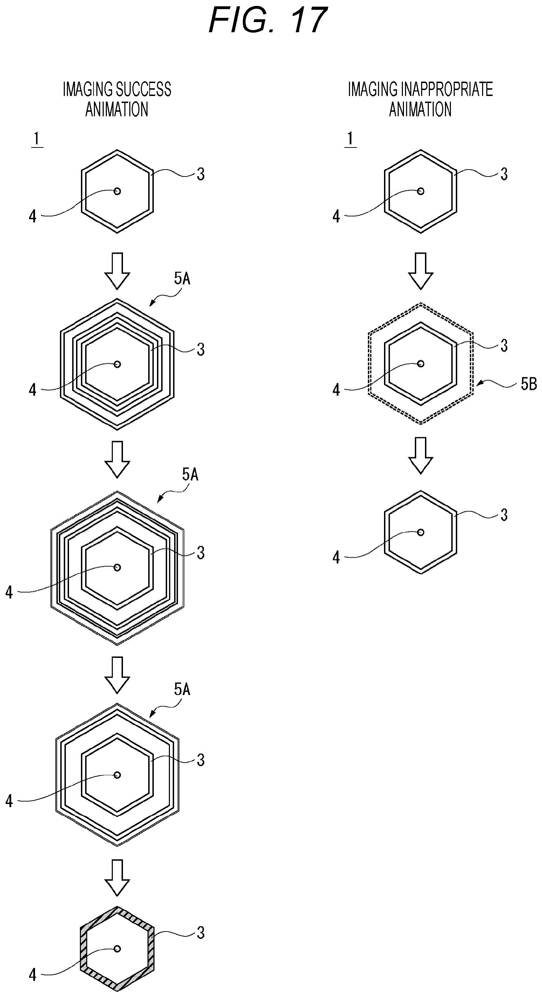

At the timing of the shutter control, the display control unit 30 performs display control for notifying of the shutter processing as illustrated in Fig. 16. For example, the display control unit 30 displays an imaging success animation 5A in which a navigation frame 3 of the target indicator 1T spreads out in several layers. Fig. 17 illustrates an example of the imaging success animation 5A. This is an example of an animation in which some hexagonal frames are generated around the original navigation frame 3 and each of the hexagonal frames is enlarged, and disappears when a certain size is reached.

Note that, at this time, the imaging control unit 24 performs control for causing the output unit 26 to output a sound (an electronic sound or the like) indicating successful imaging together with the imaging success animation 5A.

The user can recognize, on the basis of the imaging success animation 5A and the electronic sound, that the shutter processing has been performed, and can switch a target to another target indicator 1.

In addition, after the imaging success animation 5A is displayed as described above, the display mode of the target indicator 1T is changed. For example, the target indicator 1 that has been white is grayed. In Fig. 17, hatching indicates that a color of the navigation frame 3 has changed after an end of the imaging success animation 5A.

In addition to the color, the display mode may be changed in other ways such as lowering the luminance of the navigation frame 3 or making the navigation frame 3 a broken line.

With such a change in the display mode, the user can grasp whether imaging has already been performed or has not been performed for each target indicator 1.

In addition, after successful imaging, an imaged range becomes a colored region 9 in the monitor image 150. Although illustrated as a stippled portion in Fig. 16, for example, green is overlaid in the monitor image 150 to form a translucent green colored region 9. The user can recognize that at least one or more captured images have been obtained in a greenish region in the monitor image 150.

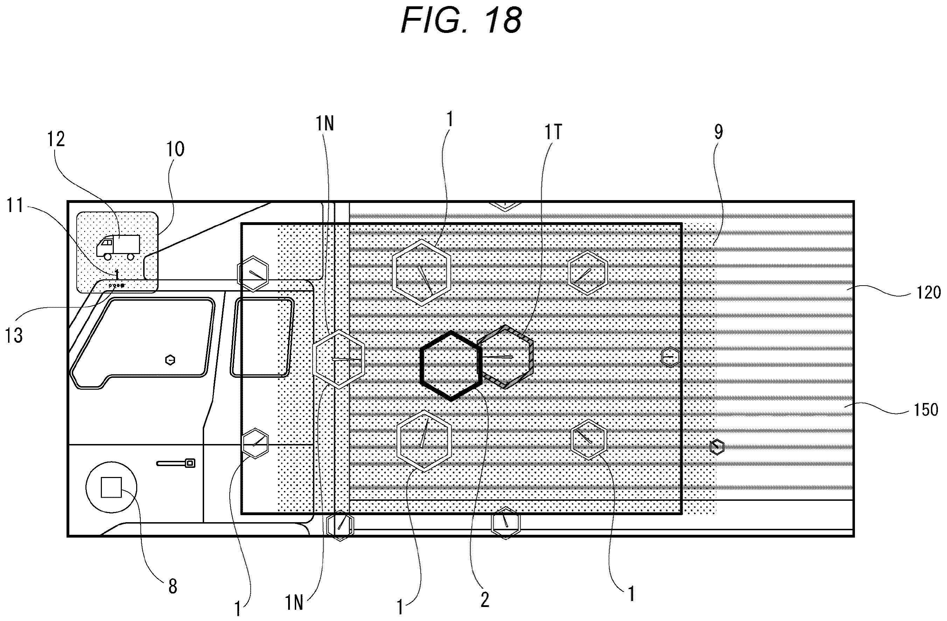

Fig. 18 illustrates a state in which the user is moving the imaging position toward another target indicator 1N after finishing imaging once. The self-indicator 2 approaches the target indicator 1N on the display. Since the self-indicator 2 is fixed substantially at the center of the screen, however, the range of the subject displayed on the monitor moves in practice as a result of the movement of the imaging position of the imaging device 51, and the target indicator 1 moves along with the subject. As for a feeling of the user, moving the imaging device 51 held in the hand produces a feeling of moving the self-indicator 2, and the user feels an operation of sequentially bringing the self-indicator 2 closer to a large number of target indicators 1 on the subject.

In addition, in the screen of Fig. 18, the colored region 9 in which imaging has already been performed and the field-of-view presentation frame 6 are shifted as a result of the movement of the imaging position.

In addition, as described above, a color and the like of the target indicator 1T for which imaging has been finished change (indicated by hatching in the drawing).

Note that a captured image is uploaded as a result of imaging at a point of the target indicator 1T, and the server device 40 performs 3D modeling for preview. At a time of Fig. 18, therefore, the number of images 11 is displayed as "1" in the simple preview window 10, and the reduced preview 12 of an incomplete 3D model at this time is displayed.

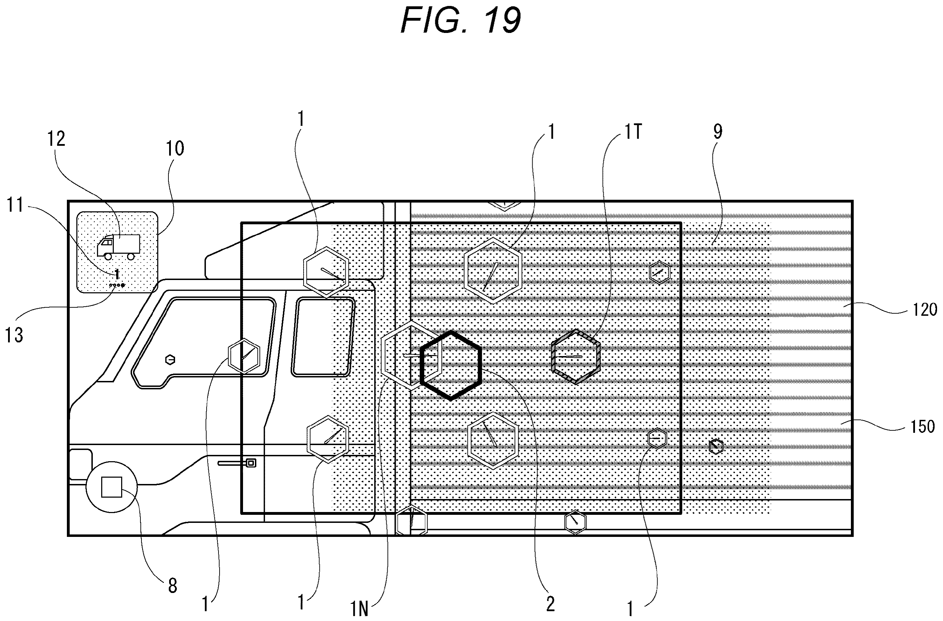

Fig. 19 illustrates a state in which the self-indicator 2 and the target indicator 1N are closer to each other. As can be seen by comparing Figs. 16, 18, and 19, size of the navigation frame 3 of each target indicator 1 and a state of the direction presentation portion 4 change in relation to the imaging position at each point in time.

Thereafter, when the user adjusts the imaging position such that the self-indicator 2 overlaps the target indicator 1N, the imaging unit 20 performs the shutter processing under the control of the imaging control unit 24 at this point in time.

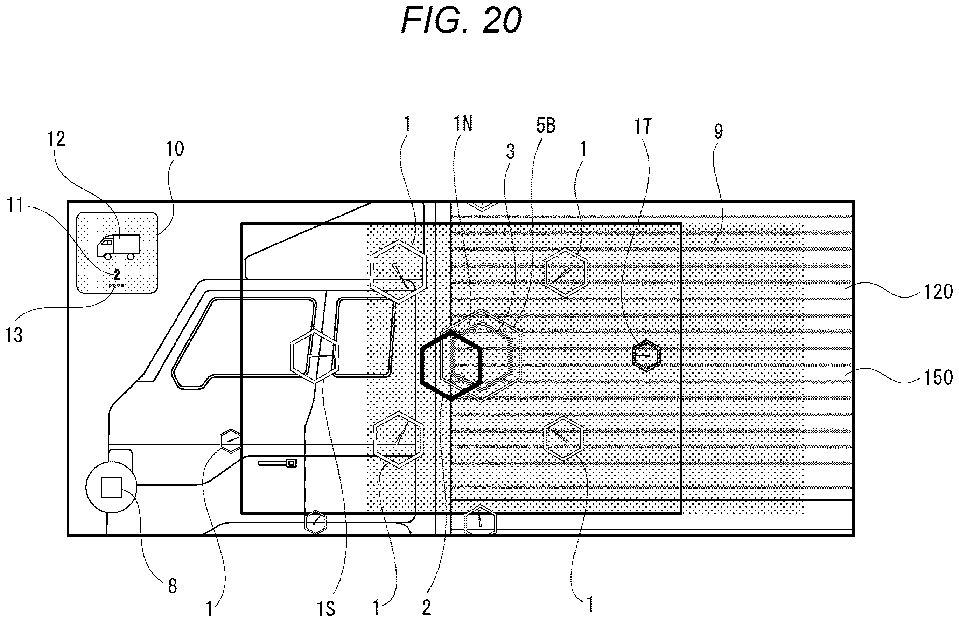

It is assumed that quality of an obtained captured image, however, is low at this time. For example, it is assumed that it is determined that defocus, camera shake, exposure failure, or the like has occurred. In this case, an imaging inappropriate animation 5B in Fig. 20 is displayed. Fig. 17 illustrates an example of the imaging inappropriate animation 5B, which is an image having less glitter than the imaging success animation 5A. For example, an example is one frame that disappears immediately in an attempt to expand. Fig. 20 illustrates a state in which such an imaging inappropriate animation 5B is displayed for the target indicator 1N.

In addition, in order to indicate that the imaging quality is poor, the color of the navigation frame 3 of the target indicator 1N may be changed. The drawing illustrates a state in which the color of the navigation frame 3 has changed. The color in this case is different from that of the target indicator 1T for which imaging has succeeded.

In addition, at this time, the imaging control unit 24 performs control for causing the output unit 26 to output a sound (an electronic sound or the like) indicating inappropriate imaging together with the imaging inappropriate animation 5B.

Due to the imaging inappropriate animation 5B and the electronic sound, the user can recognize that the captured image has not been obtained with an appropriate quality and re-imaging should be performed.

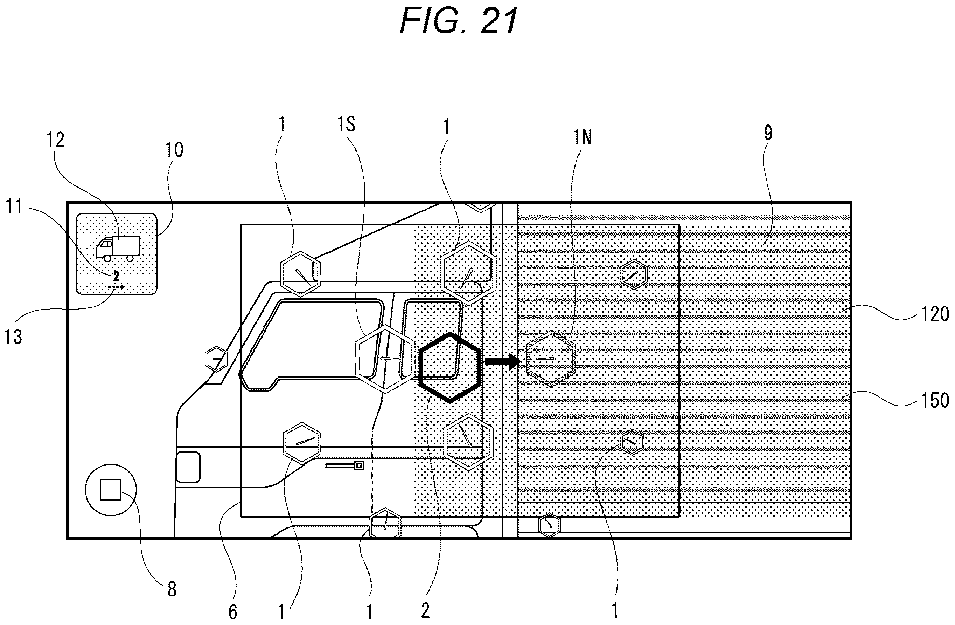

At each time point in Figs. 16, 18, 19, and 20, the user moves from right to left in such a way as to follow each target indicator 1. For example, when the user recognizes an imaging failure from the imaging inappropriate animation 5B or the electronic sound, it is normally assumed that the self-indicator 2 has passed through a position substantially coinciding with the target indicator 1N in the monitor image and is moving toward a next target indicator 1S as illustrated in Fig. 21. Here, in a case where the user recognizes the imaging failure and considers re-imaging, the user may return the imaging position in a direction of an arrow in the drawing, that is, as a feeling of the user, return the self-indicator 2 to the target indicator 1N.

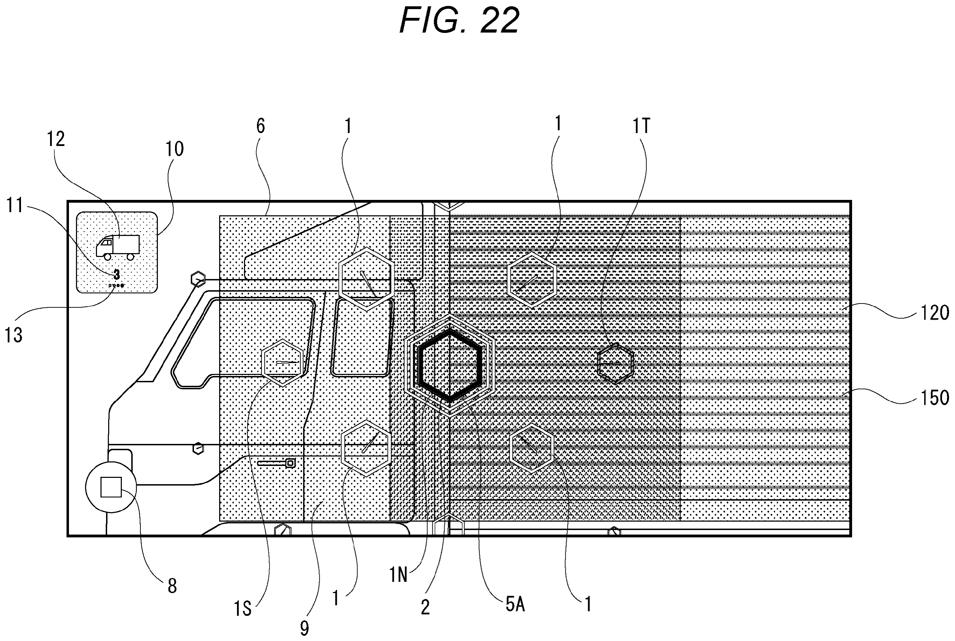

Fig. 22 illustrates a case where the imaging control unit 24 has caused the imaging unit 20 to perform imaging as a result of the user matching the self-indicator 2 with the target indicator 1N again. In this case, an example is assumed where quality of a captured image is sufficient, and the imaging success animation 5A is displayed.

In addition, as a result of the successful imaging, a range of the captured image at this time is set as a colored region 9, that is, for example, a translucent green region. A portion overlapping with the captured image for the previous target indicator 1T becomes relatively dark green due to overlapping greens. In the drawing, for the sake of explanation, the portion is illustrated as a portion having a high stipple density.

A region imaged on the subject is thus displayed as if light green films are sequentially overlapped on each other, and the green color becomes darker in a region in which more images have been taken in an overlapping manner. A dark green region can be recognized as a region in which a large amount of information for 3D modeling has been obtained.

As described above, the user moves the imaging position of the imaging device 51 such that the self-indicator 2 follows each target indicator 1. Thereafter, by substantially matching the self-indicator 2 with each target indicator 1, a captured image at the corresponding recommended imaging position is obtained and uploaded to the server device 40, and 3D modeling is performed.

The user can follow each target indicator 1 and advance the imaging operation like a game in which the user paints the subject in green.

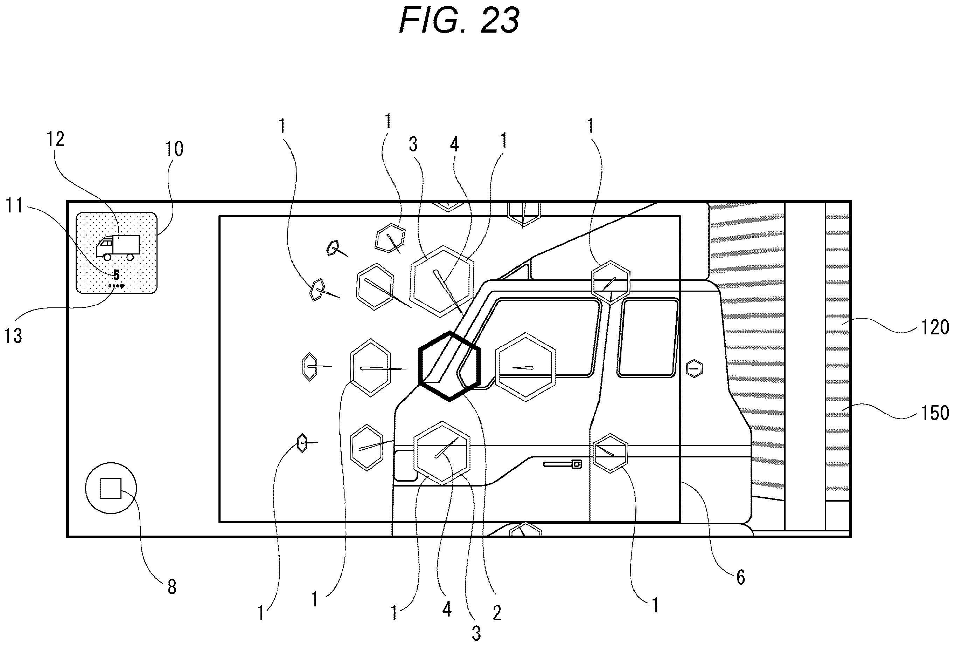

Fig. 23 illustrates a display state at a time when the user has moved the imaging position to the vicinity of a driver's seat of the truck. Display shapes of navigation frames 3 and direction presentation portions 4 of target indicators 1 corresponding to recommended imaging positions on a front side of the truck change depending on relationships with the position and direction of the imaging device 51. That is, since a direct facing direction with respect to the front side of the truck greatly deviates from the current direction of the imaging device 51, the navigation frames 3 have shapes viewed from oblique directions according to the deviation, and needle-shaped portions of the direction presentation portions 4 are also elongated in a lateral direction.

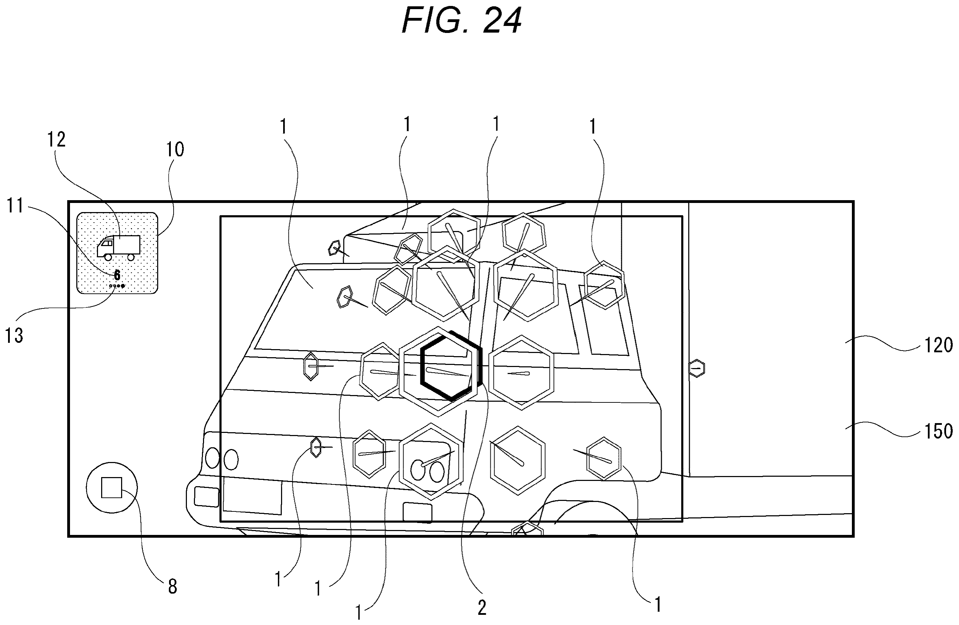

Fig. 24 illustrates a display state at a time when the user has moved the imaging position to a position diagonally in front of the driver's seat of the truck. As compared with Fig. 23, it can be seen that the shapes of the navigation frames 3 and the direction presentation portions 4 of the target indicators 1 change due to the change in the imaging position.

That is, each navigation frame 3 looks like a regular hexagon in a state of directly facing the corresponding recommended imaging position, but in a case where the imaging direction of the imaging device 51 is not directly facing the recommended imaging position, the navigation frame 3 is drawn in three dimensions in a state where a regular hexagon is obliquely viewed, that is, in a state of a non-regular hexagon, on a screen plane. Similarly, each direction presentation portion 4 is drawn in three dimensions, so that an appearance changes between a direct facing state and a non-direct facing state.

Note that since the navigation frame 3 is displayed in three dimensions, the target indicator 1 does not become a regular hexagon unless the direct facing state is established. This means not only that a regular hexagon indicates the direct facing direction but also that the self-indicator 2, which is another regular hexagon, does not match the target indicator 1 unless in the direct facing state. That is, there is also an effect of preventing the imaging unit 20 from performing imaging unless the direct facing state is not established.

In the images of Figs. 23 and 24, density of the target indicators 1 is high as can be seen by comparing the images with those of Fig. 21 and the like. In the vicinity of the driver's seat, the shape is more complicated than a cargo bed side of the truck. Therefore, many recommended imaging positions are set. In a region having such a complicated shape, recommended imaging positions are densely set so that the accuracy of 3D modeling can be improved.

In a flat portion or the like, on the other hand, 3D modeling can be accurately performed with a small number of captured images, and the number of images to be captured can be reduced by sparsely setting recommended imaging positions on the cargo bed side or the like.

As for the simple preview window 10, for example, as illustrated in Figs. 21, 23, and 24, display content changes in accordance with the progress of image uploading and 3D modeling in the server device 40. As a result, the user can grasp the progress in a simplified manner.

As described above, in the navigation screen 120, a target indicator 1 is displayed on the basis of the subject shape and the imaging position (self-position) of the imaging device 51 as a guide whose shape changes in such a way as to urge the user to approach a point where imaging can be performed with a desired quality.

At the same time, surrounding target indicators 1 are also displayed to indicate points for which imaging should be performed next.

These target indicators 1 change appearances thereof in accordance with directions and distances for directly facing the subject so that a positional relationship between the imaging device 51 and the subject can be easily understood.

In addition, with respect to the target indicator 1 to be matched with the self-indicator 2 at the center of the screen, the surrounding target indicators 1 change overlaps and directions on the basis of the shape of the subject so that the shape can be more accurately recognized.

In addition, in the navigation screen 120, how each target indicator 1 is displayed is changed so that the user can recognize the timing of the shutter processing.

In addition, the display mode of each target indicator 1 is changed at or after the timing of the shutter processing so that the user can recognize whether or not imaging has been performed for the target indicator 1.

In addition, although each target indicator 1 has a three-dimensional appearance, it is easy for the user to understand that he/she is approaching a correct imaging position by changing not only the appearance but also the size in an exaggerated manner.

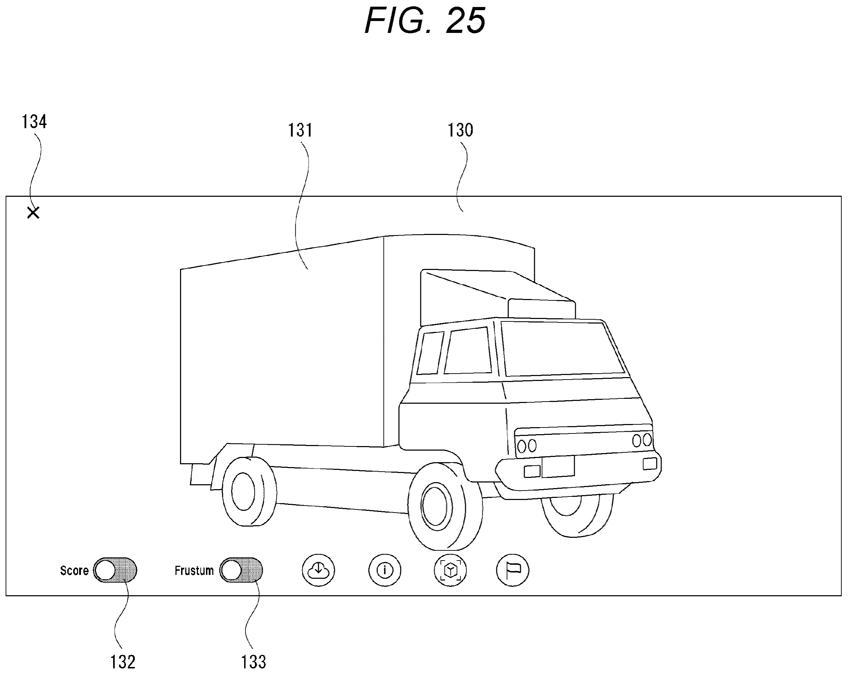

Next, a preview screen 130 will be described with reference to Figs. 25, 26, and 27.

For example, when the simple preview window 10 in the navigation screen 120 is operated, the navigation screen 120 is switched to the preview screen 130 illustrated in Fig. 25.

In the preview screen 130, a 3D model 131 for preview generated in the server device 40 at the display time is displayed.

The displayed 3D model 131 for preview can be rotated upward, downward, leftward, and rightward to change a viewpoint through, for example, a drag operation or the like. With the 3D model 131, the user can determine how much the imaging operation has progressed so far, which part images are insufficient in, and the like during the operation.

In addition, in the preview screen 130, a score switch 132, a frustum switch 133, a close button 134, icons for various other operations, and the like are displayed.

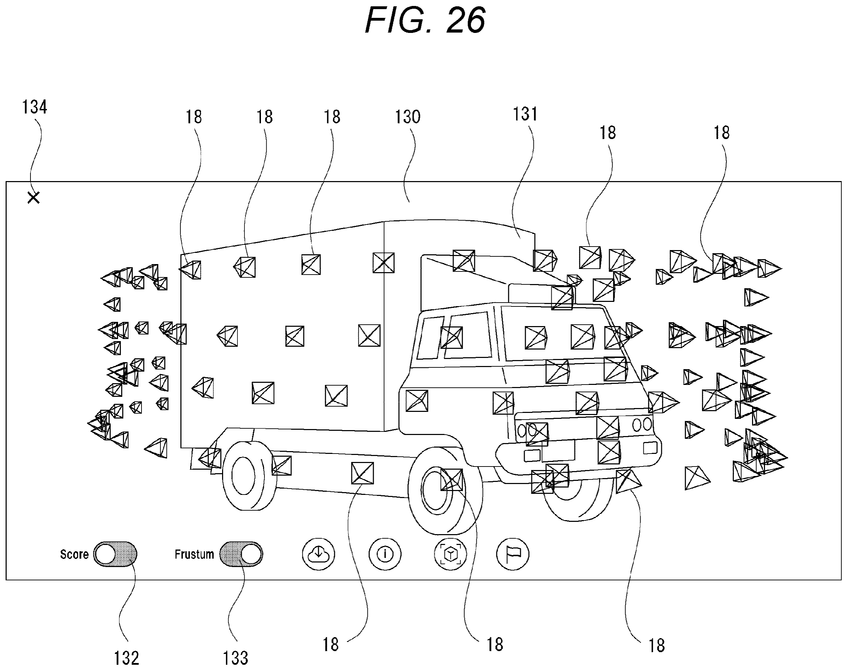

When the user turns on the frustum switch 133, frustums 18 are displayed for the 3D model 131 as illustrated in Fig. 26. Each frustum 18 indicates a portion where imaging as the image obtaining processing has been performed.

Note that recommended imaging positions for which images have not been captured may also be indicated by frustums 18. In this case, a display mode of the frustums 18 indicating that imaging has been performed and a display mode of the frustums 18 indicating that imaging has not been performed are made different from each other, so that the user can determine whether or not imaging has been performed. For example, it is assumed that different colors or levels of brightness are used or different shapes of frames are used.

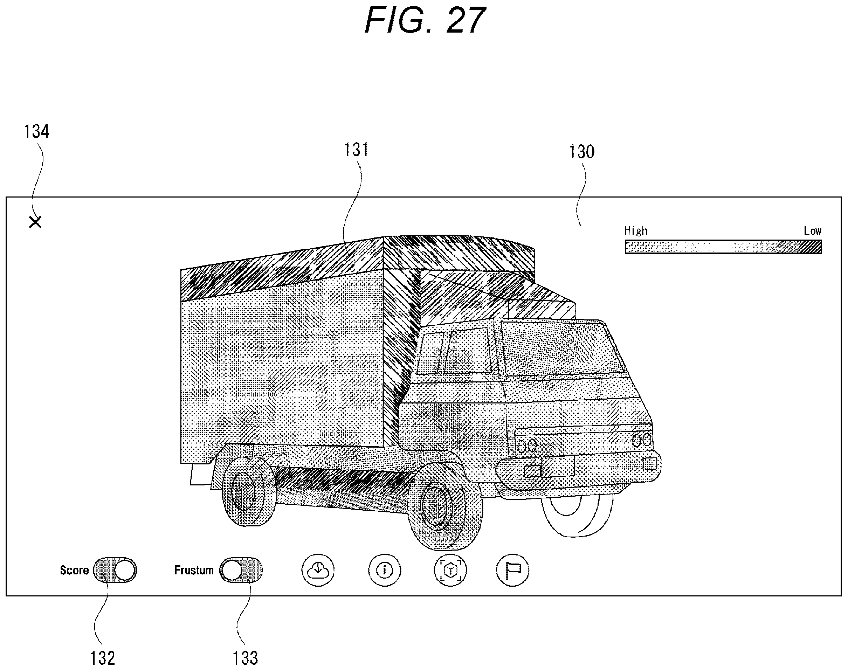

When the user turns on the score switch 132, a state in which a surface of the 3D model 131 is color-coded by a score of each of parts is displayed as illustrated in Fig. 27.

In the drawing, stippled portions are, for example, regions colored in green, and hatched portions are, for example, regions colored in red. It is assumed that a darker green region has a higher score for image quality and the amount of information, and a darker red region has a lower score.

In the green portions, for example, similarly to the colored region 9 in the navigation screen 120, the green becomes darker as the amount of information has increased in the imaging so far. Portions in which imaging has not yet been performed and portions that have complicated shapes and for which a sufficient number of images have not been captured or a sufficient amount of has not been obtained are colored in red with different densities depending on a degree of insufficiency.

Note that when both the frustum switch 133 and the score switch 132 are turned on, for example, the frustums 18 are displayed on the image of Fig. 27 as in Fig. 26.

When the close button 134 is operated, the screen returns to the navigation screen 120.

As described above, the display in the preview screen 130 allows the user to check the progress of the imaging operation in the middle of the operation. In addition, it is possible to learn portions where imaging has been sufficiently performed or portions where imaging is insufficient, and it is possible to appropriately determine positions at which imaging is to be performed thereafter.

Note that a function of displaying a list of thumbnail images may be provided in the simple preview window 10 or the preview screen 130 for images captured so far.

### <4. Processing Examples>

Processing examples of the imaging device 51 for displaying the navigation screen 120 and the preview screen 130 in the above description will be described. The following processing examples include processing of the real-time 3D modeling (first 3D modeling) and control processing performed by the imaging control unit 24 and the display control unit 30 in an actual imaging operation.

Fig. 28 illustrates a processing example in a case where the pre-scanning is not performed. That is, when the imaging unit 20 actually performs imaging as the image obtaining processing, the imaging device 51 performs real-time 3D modeling on the basis of detection information from the depth sensor 31 and the like, sequentially sets recommended imaging positions near a current imaging position in accordance with the real-time 3D modeling, and displays target indicators 1. The shutter processing of the imaging unit 20 is then automatically performed as the target indicator 1 and the self-indicator 2 substantially match, and captured image data is uploaded. Fig. 28 illustrates a processing example for displaying the navigation screen 120 and the preview screen 130 in a case where such real-time scanning is performed.

In step S101, the imaging device 51 sets imaging definition in accordance with an input from the user. This allows the user to select a level of definition at which a 3D model is to be generated, and the user sets the level of definition in accordance with a purpose. In a case where a highly accurate 3D model is required, the number of images to be captured increases, and an imaging workload increases. If the imaging workload is reduced, on the other hand, it becomes difficult to increase accuracy of the 3D model. Therefore, by the user setting the level of definition in advance, the imaging device 51 can set the number of recommended imaging positions suitable for the level of definition.

In step S102, the imaging device 51 calculates an optimal imaging distance. A range on the subject covered by one captured image is determined in accordance with the required level of definition, and an imaging position in the depth direction with respect to the subject is set in accordance with the range. The depth for imaging an appropriate range is thus set as the optimal imaging distance. That is, the depth as the optimum imaging distance is set such that a range on the subject according to the level of definition set for an imaging field of view of the imaging unit 20 can be imaged.

After the start button 7 is operated by the user and the actual imaging operation is started, the processing in and after step S103 is performed. That is, the real-time 3D modeling starts.

In step S103, the imaging device 51 generates a mesh using a result of the detection performed by the depth sensor 31.

In step S104, the imaging device 51 calculates direct facing vectors in detection regions. That is, a direct facing direction is calculated for each region in the mesh.

In step S105, the imaging device 51 sets a center reference point and a direction of a target indicator 1.

In step S106, the imaging device 51 sets display points of surrounding target indicators 1 such that overlap ratios become constant.

In step S107, the imaging device 51 sets or updates drawing size and shapes (directions) of the target indicators 1 on the basis of a result of self-localization.

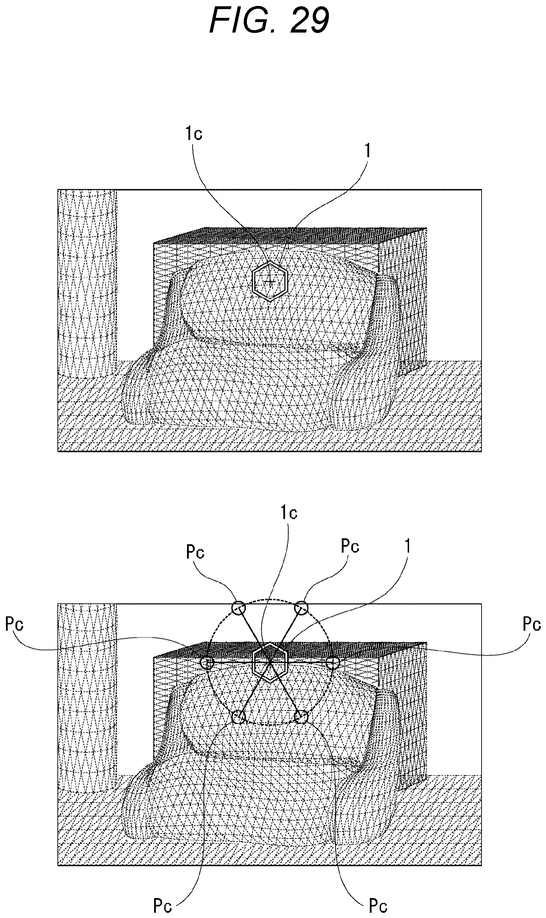

Processing for setting the display points of the target indicator 1 in the above description will be described with reference to Figs. 29 to 32.

An upper part of Fig. 29 illustrates the mesh generated in step S103, one target indicator 1, and one center reference point 1c. For example, the center reference point 1c is set on the basis of a target indicator 1 close to a current imaging position of the imaging device 51, an imaging position for previous image obtaining processing, and the like.

As illustrated in a lower part of Fig. 29, equidistant candidates Pc are then calculated from the center reference point 1c. The equidistant candidates Pc are candidates for a recommended imaging position around the center reference point 1c.

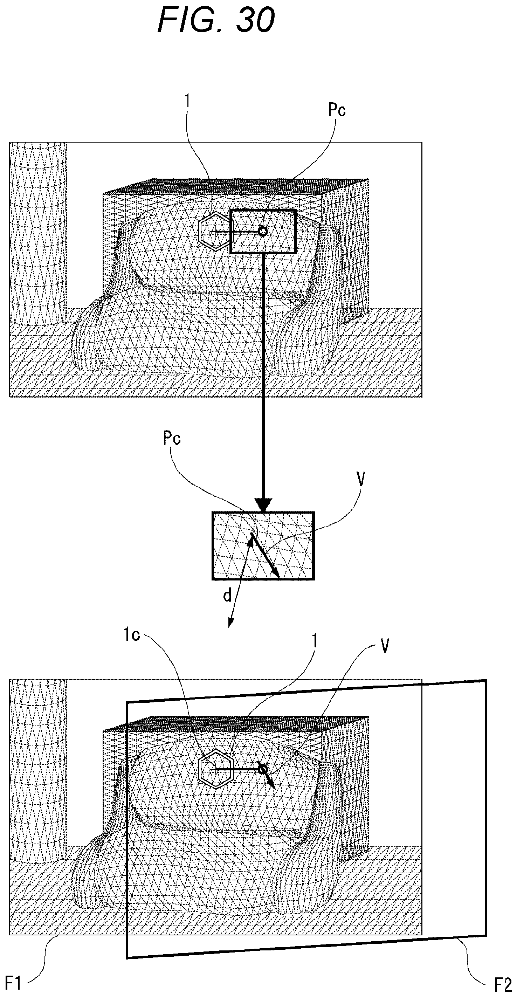

Next, as illustrated in an upper part of Fig. 30, the equidistant candidate Pc in a direction in which the user is moving is detected, and as illustrated in a middle part of Fig. 30, a distance d between the imaging device 51 and a polygon and a normal vector v are calculated on the basis of the mesh.

As illustrated in a lower part of Fig. 30, an overlap ratio at a position of the ideal normal vector v is then calculated. This is an overlap ratio between a first imaging range F1 and an imaging range F2 at a position matched with the normal vector v in the equidistant candidate Pc.

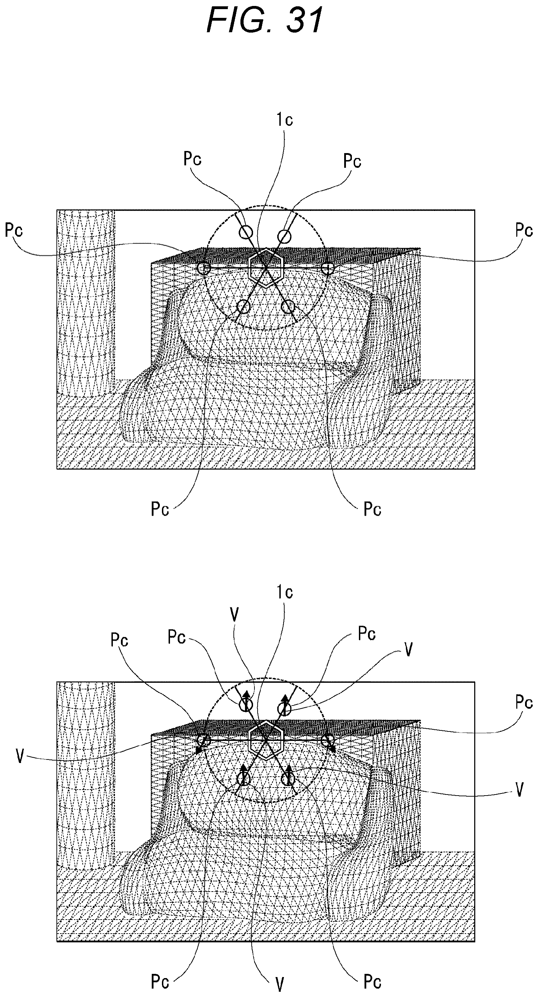

Since the set appropriate overlap ratio (for example, 70%) is not necessarily achieved, however, positions (intervals) of the equidistant candidates Pc are adjusted such that the overlap ratios become constant as illustrated in an upper part of Fig. 31.

As illustrated in a lower part of Fig. 31, re-detection is then performed on each equidistant candidate Pc, and the distance d (not illustrated) between the imaging device 51 and the polygon and the normal vector v are calculated.

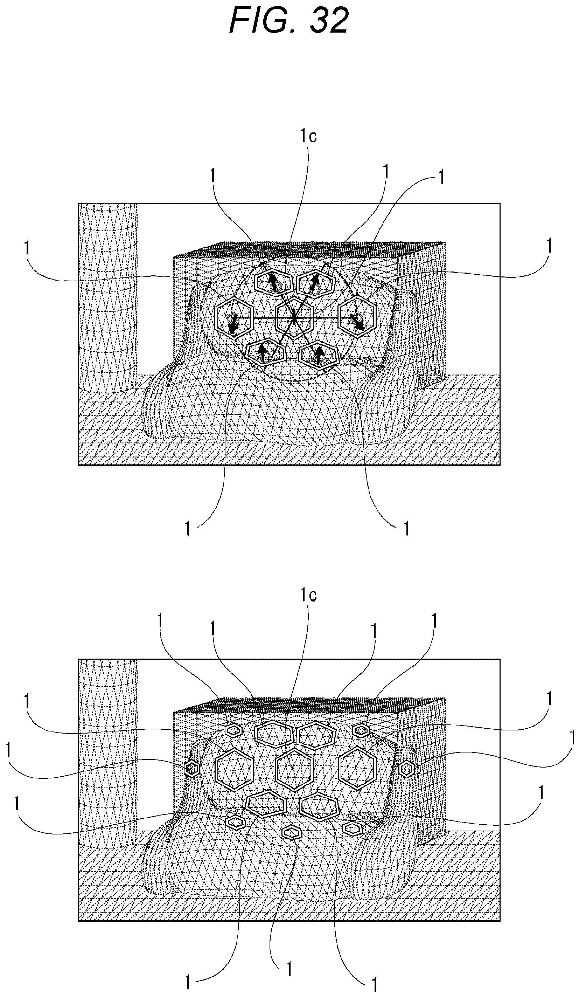

As illustrated in an upper part of Fig. 32, size and a direction are then set in accordance with the current position of the imaging device 51, and drawing is performed such that each target indicator 1 is arranged around the position of the corresponding equidistant candidate Pc.

Furthermore, equidistant candidates Pc are similarly set for the surrounding target indicators 1, but size of the target indicators 1 decreases as the distance increases.

With the above algorithm, the target indicators 1 are displayed in a visual field range on the basis of the current imaging position of the imaging device 51.

In step S120, the imaging device 51 determines whether or not the self-position has moved to a range of one of the surrounding target indicators 1. For example, when a part of the self-indicator 2 comes into contact with a certain target indicator 1, the imaging device 51 determines that the self-indicator 2 has moved into a range of the new target indicator 1. Alternatively, when a center position of the self-indicator 2 becomes closer to one of the equidistant candidates Pc than the center reference point 1c at the time of drawing in step S107, it may be determined that the self-position has moved into the range of the corresponding surrounding target indicator 1.

If determining that the self-position has moved into the range of one of the surrounding target indicators 1, the imaging device 51 returns from step S120 to step S103 and performs the processing up to step S107.

That is, when the user moves the imaging device 51 and the self-indicator 2 moves to the vicinity of an adjacent target indicator 1 displayed on the equidistant candidate Pc, the center position of the target indicator 1 (that is, a position of the equidistant candidate Pc in previous calculation) is set as a new center reference point 1c, and the processing from step S103 to step S107 is performed. As a result, target indicators 1 are displayed in the visual field range in accordance with the current imaging position.

By repeating the drawing in step S107 in accordance with the movement of the imaging position in this manner, recommended imaging positions within the current visual field range are sequentially set in accordance with the movement even if the pre-scanning is not performed, and target indicators 1 are displayed.

When the imaging position is within a range of a certain target indicator 1, the imaging device 51 determines in step S110 whether or not the self-indicator 2 matches the target indicator 1. Here, "match" does not refer to only perfect matching, but may hold true when substantial matching, that is, matching in a rough view, is achieved. This is because it is difficult for the user to completely align the self-indicator 2 with a target indicator 1.

Therefore, a "matching determination" in the present disclosure is processing of determining in which a substantially matching state may be regarded as matching.

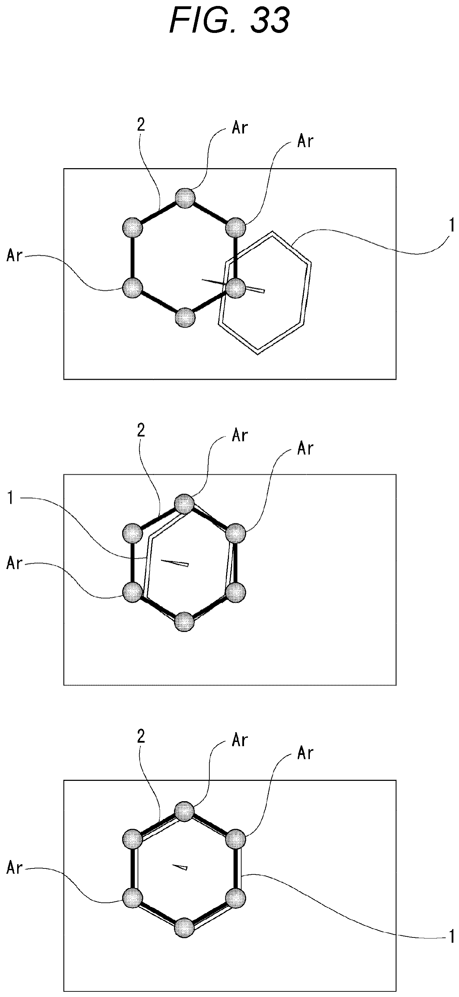

For example, the imaging device 51 performs the matching determination using an algorithm described with reference to Fig. 33.

As illustrated in an upper part of Fig. 33, a hit determination region Ar such as a sphere is virtually set at each of vertices of the self-indicator 2. When the user tries to align the self-indicator 2 with a target indicator 1, the determination regions Ar each enter a vertex of the target indicator 1 as illustrated in a middle part of Fig. 33. As illustrated in a lower part of Fig. 33, when all the hit determination regions Ar enter the vertices of the target indicator 1, it is determined that the self-indicator 2 and the target indicator 1 match (overlap).

By performing the determination in this manner, it is possible to determine "match" with a certain degree of latitude, and it is possible to improve usability for the user.

If it is determined that the indicators are in a matching state, the imaging device 51 proceeds from step S110 to step S111, and performs the shutter processing of the imaging unit 20. That is, after imaging as the image obtaining processing is performed and predetermined signal processing is performed in the image processing unit 22, uploading from the communication unit 29 to the server device 40 is performed.

At this time, regarding the display, the imaging device 51 performs, in step S112, processing such as display based on image quality of an imaging result. That is, the imaging device 51 determines whether or not the quality of the captured image obtained through the shutter processing is good from a focus state, a camera shake state, an exposure state, and the like.

If determining that there is no quality problem, the imaging device 51 then displays the imaging success animation 5A and outputs an electronic sound or the like indicating successful imaging. Furthermore, after the imaging success animation 5A is displayed, processing for changing a display mode of the target indicator 1 to one indicating that imaging has been completed is performed. The processing then returns to step S107.

In addition, if the imaging device 51 determines that there is a problem in the quality of the captured image, the imaging device 51 displays the imaging inappropriate animation 5B and outputs an electronic sound or the like for prompting re-imaging. The processing then returns to step S107. Note that, in this case, the display mode of the target indicator 1 may be the same as that before the imaging, but for example, may be changed to a different display mode indicating re-imaging, instead.

There is a case where the user performs an operation in which the user uses the preview screen 130, such as touching the simple preview window 10. In this case, the imaging device 51 proceeds from step S150 to step S151, displays the preview screen 130, and performs, in step S151, one of the above-described various types of display processing in accordance with the user operation on the preview screen 130. If the user performs an operation for ending the preview screen 130 using the close button 134 or the like, the process proceeds from step S152 to step S153, the navigation screen 120 is returned, and the process returns to step S107.

By performing scanning in real-time and generating the target indicator 1 through the above processing, it is possible to guide the user to the imaging position.

Fig. 34 illustrates a processing example in a case where the pre-scanning is performed. That is, before the imaging unit 20 actually performs imaging as the image obtaining processing, the imaging device 51 performs real-time 3D modeling on the basis of detection information from the depth sensor 31 and the like, sets recommended imaging positions in accordance with the real-time 3D modeling, and displays target indicators 1.

Therefore, the imaging device 51 sets, in step S101, the imaging definition in accordance with the input from the user, and the processing from step S102 to step S106 is performed on the basis of a result of the pre-scanning.

Since the processing from step S102 to step S106 is similar to that in Fig. 28, redundant description is avoided, but in the case of Fig. 34, recommended imaging positions, that is, display positions of target indicators 1, can be set in advance in an entire area of the subject on the basis of the 3D model and the setting of the imaging definition obtained through the pre-scanning.

Therefore, the matching determination may be performed in step S110 while sequentially updating the drawing of the target indicators 1 in step S107.

That is, the process returns to step S103 as a result of the determination in step S120 in Fig. 28, and a process for sequentially performing steps S103 to S106 becomes unnecessary.

### <5. Various Examples of Screen Display>

Various examples related to screen display such as the ROI setting screen 110 and the like on the navigation screen 120 and the preview screen 130 will be described hereinafter.

A shape of the target indicator 1 is not limited to the above-described hexagon, and may be a circle, a triangle, a quadrangle, or another figure, instead. The self-indicator 2 has the same shape as the target indicator 1.

In addition, the target indicator 1 may be displayed as, for example, a hexagonal pyramid, a hexagonal prism, or the like so that the direct facing direction can be recognized.

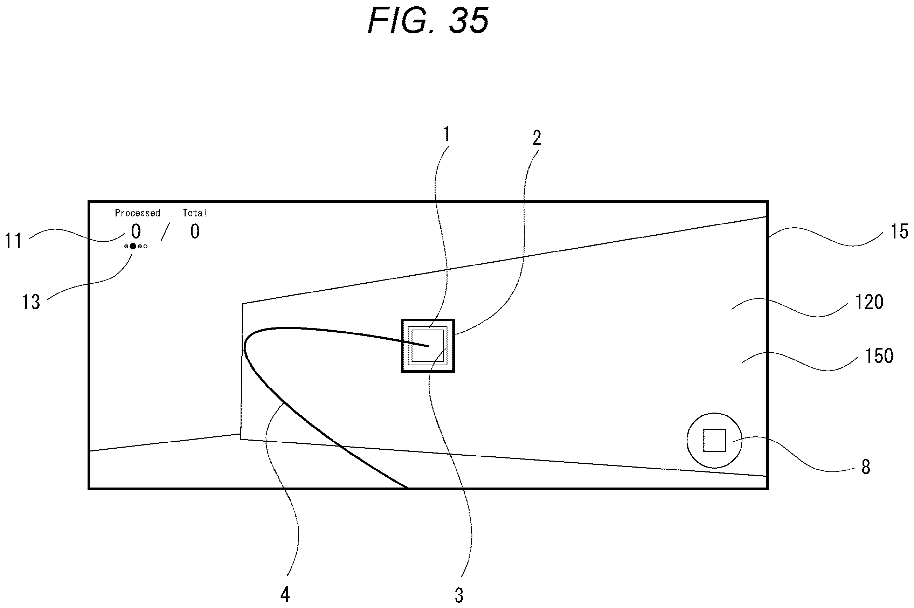

In addition, a shape of the direction presentation portion 4 is not limited to the needle, and for example, as illustrated in Fig. 35, display in which a line is extended from the user's hand in a direction directly facing the subject is also conceivable.

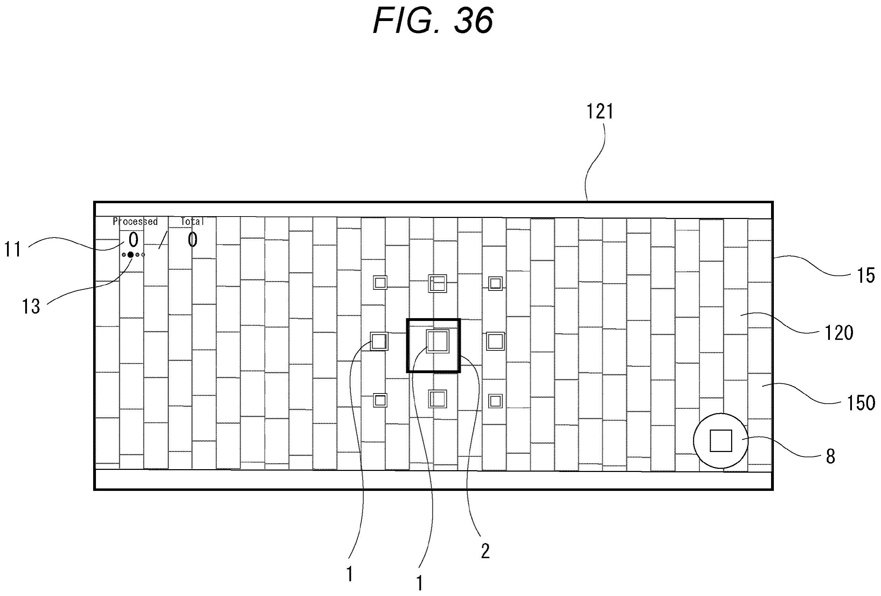

Figs. 36 to 38 illustrate an example of quadrangular target indicators 1 and self-indicator 2.

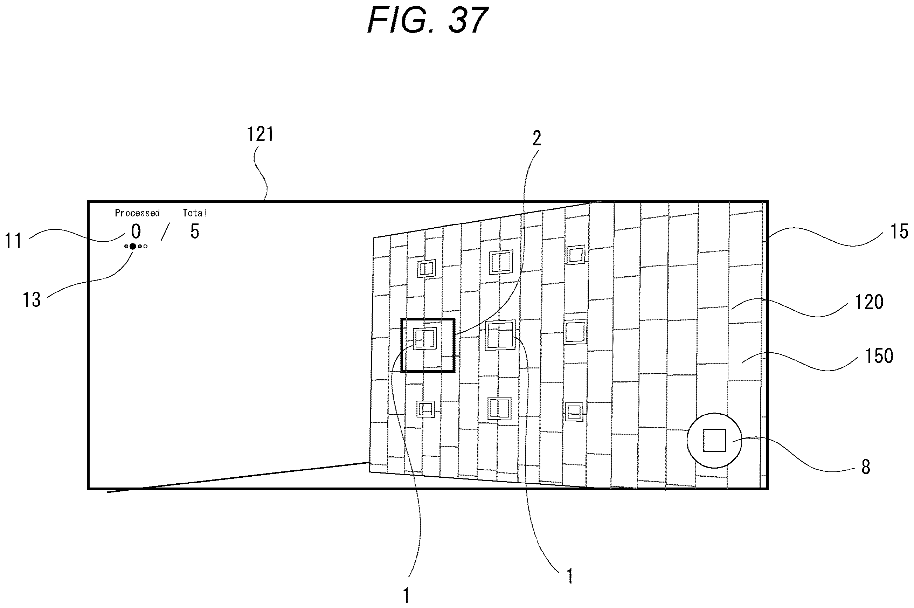

Fig. 36 illustrates a state in which the imaging device 51 is substantially directly facing a subject. The target indicators 1 are drawn in substantially square shapes. Fig. 37 illustrates a state in which the imaging device 51 is obliquely viewing a surface of the subject. The target indicators 1 have obliquely viewed shapes.

The subject is modeled by the depth sensor 31, a normal of the surface is calculated, and frames of the target indicators 1 are displayed in such a way as to be oriented in a normal direction to achieve the above state.

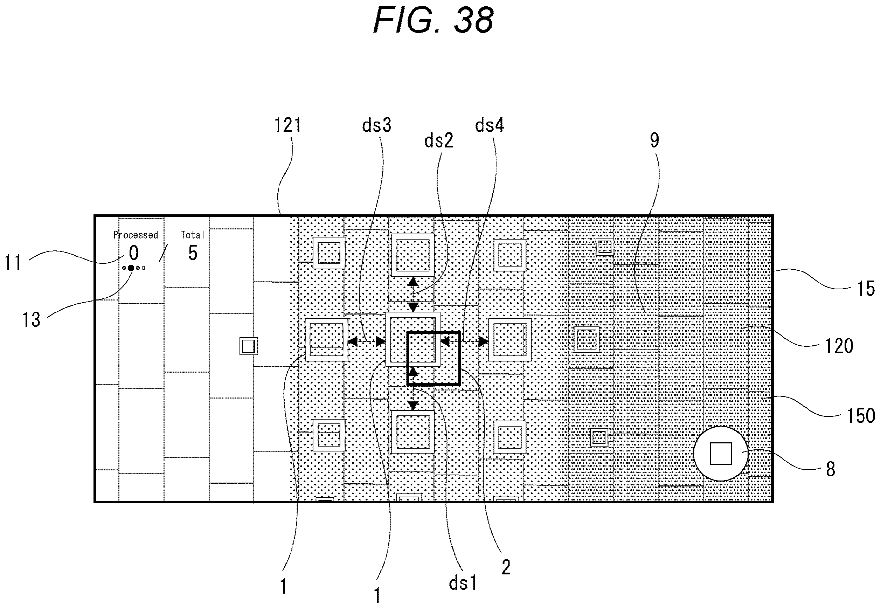

In addition, in Fig. 36, because a distance of the imaging device 51 is relatively long, the target indicators 1 are small. In Fig. 38, on the other hand, the distance is optimized, and the size of the target indicators 1 is close to that of the self-indicator 2.

Even in the case of quadrangles as described above, by changing sizes and directions of the target indicators 1 in accordance with the position and direction of the imaging device 51, appropriate guides, that is, guides for overlapping the self-indicator 2 on the target indicators 1 in a direct facing state, can be provided for the user.

In addition, Fig. 38 illustrates distances ds1, ds2, ds3, and ds4 between target indicators 1, and in this case as well, the target indicators 1 are displayed by setting recommended imaging positions in such a way as to achieve optimum overlap ratios.

As for expression of the shutter processing when the user overlaps the self-indicator 2 on one of the target indicators 1, various examples other than the above-described imaging success animation 5A and the like are conceivable. Since the navigation screen 120 is constantly updated, it is preferable to notify the user timings at which the shutter processing for capturing a still image has been performed, and therefore any notification mode may be used to express the shutter processing.

For example, it is conceivable to temporarily white out or black out the screen at the shutter processing timing.

Alternatively, only vibration and a sound may be presented to the user at the shutter processing timing.

Alternatively, an imaging range of the subject may be colored at the shutter processing timing.

In addition, in Fig. 38, a colored region 9 is indicated by stippling, and color density is indicated by density of the stippling. For example, the progress of imaging can be recognized by overlaying a subject range imaged at each timing of the shutter processing in green. The darker the color, the more the information obtained, so that the user may proceed with the operation in such a way as to paint the subject darker.

In the example of Figs. 36, 37, and 38, a frame 121 in red or the like, for example, is displayed around the navigation screen 120. For example, a frame 121 in which imaging as the image obtaining processing has started is displayed using the start button 7 to indicate that the imaging is being performed.

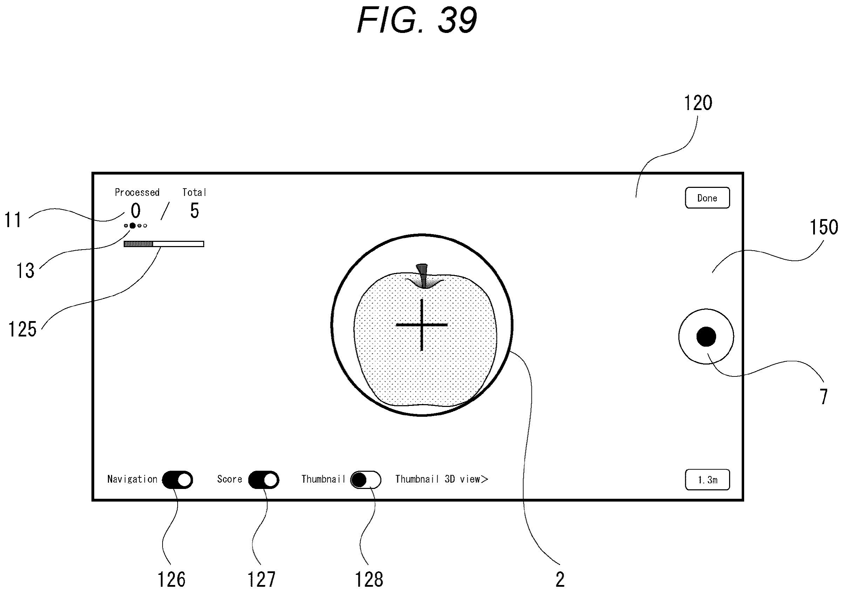

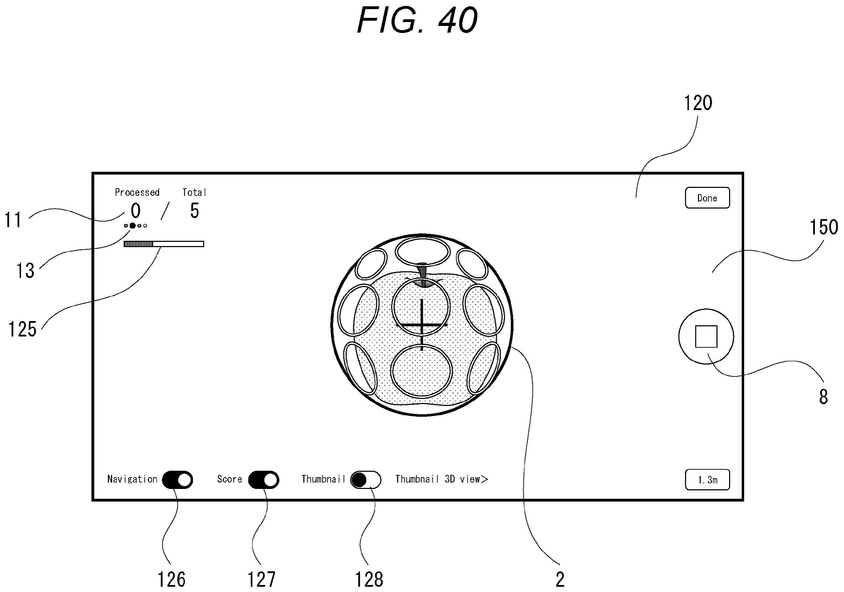

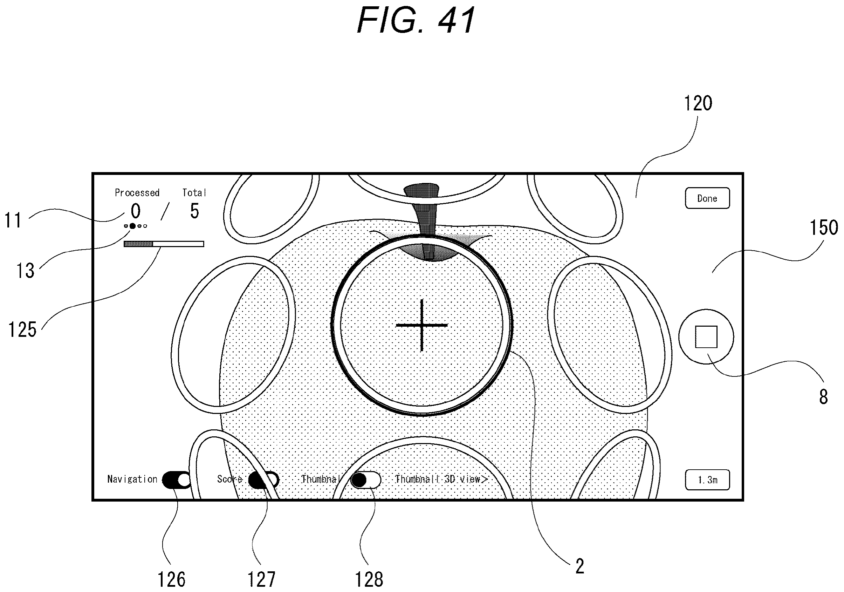

Figs. 39, 40, and 41 are examples in which the target indicators 1 and the self-indicator 2 are circular. For example, as illustrated in Fig. 39, the user puts, in the self-indicator 2, the entirety of a subject whose images are to be captured, and operates the start button 7 to start imaging. The imaging device 51 thus specifies a target 3D object, and generates the target indicators 1 in accordance with the object as illustrated in Fig. 40. As illustrated in Fig. 41, the user adjusts the imaging position such that the self-indicator 2 substantially matches a certain target indicator 1 to automatically perform the shutter processing.

Note that, in the navigation screen 120 of Figs. 39, 40, and 41, a navigation button 126, a score button 127, and a thumbnail button 128 are provided.

The navigation button 126 is a button for setting a mode for displaying the target indicators 1 and the self-indicator 2 as illustrated in the drawings. The score button 127 is a button for setting a mode for presenting image quality with, for example, a green overlay or the like. The thumbnail button 128 is a button for displaying a thumbnail of a 3D model for preview.

As an example of dynamic display of the target indicators 1, there is an example in which the target indicators 1 split and merge.

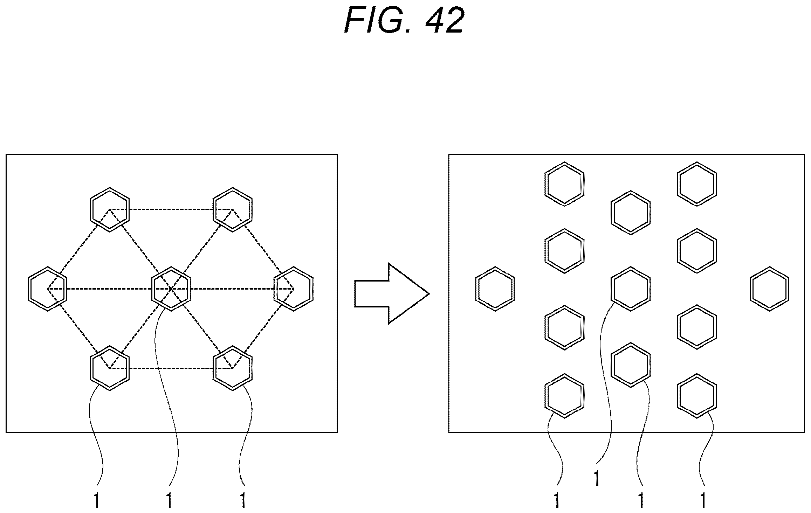

For example, if the imaging position approaches the subject in a state of a left diagram of Fig. 42, the target indicators 1 split as illustrated in a right diagram. Conversely, if the imaging position moves away from the subject, the target indicators 1 merge in the state of the right diagram to establish the state of the left diagram.

Information indicating whether or not imaging has been performed for each target indicator 1 is taken over after the split and the merging. For example, a plurality of target indicators 1 obtained by splitting a target indicator 1 for which imaging has been performed and whose color has been changed is displayed in the color indicating that imaging has been performed.

In addition, in a case where imaging has been performed for a subset of split target indicators 1 and the split target indicators 1 then merge, the imaged state may be indicated in a color of a density corresponding to a ratio of target indicators 1 for which imaging has been performed.

In addition, the target indicators 1 need not necessarily be arranged at equal intervals.

By changing arrangement intervals on the basis of a shape obtained through real-time 3D modeling, more detailed portions can be imaged finely, and flat portions can be imaged efficiently.

As for the update of the displayed target indicators 1. The user may perform the update by explicitly pressing an update button. In a case where the update button is pressed, the imaging device 51 recalculates the recommended imaging positions at which the target indicators 1 are to be displayed on the basis of a changed setting value. Information is taken over, at intervals of the new target indicators 1, for portions for which imaging has been performed.

In the navigation screen 120, guidance regarding the movement of the imaging device 51 by the user may be provided. The user moves around the 3D object carrying the imaging device 51, and it is not appropriate if the user's movement is too fast or too slow. Therefore, for example, a user interface (UI) for limiting speed of moving the imaging position and a UI for notifying that imaging cannot be appropriately performed if the speed is too high are conceivable.

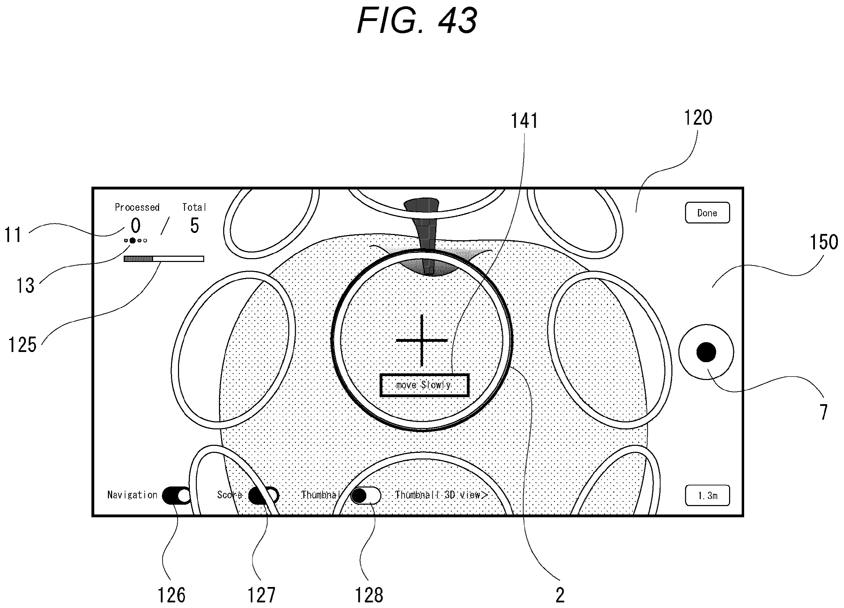

For example, as illustrated in Fig. 43, a warning indicating that the movement is too fast or too slow may be displayed as a character string 141.

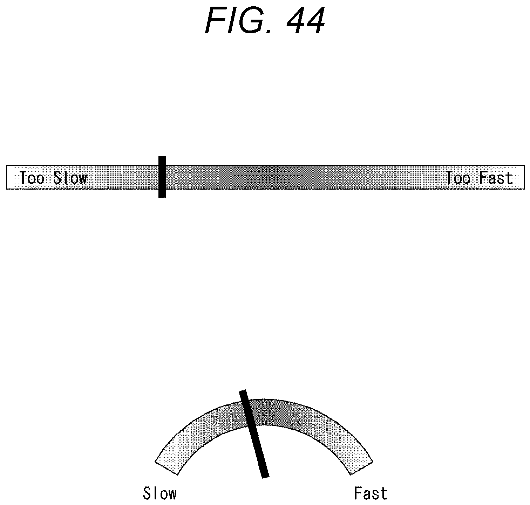

As illustrated in Fig. 44, a speed bar or a speed meter may be displayed to notify the user whether or not his/her movement is appropriate.

In addition, a blur may be applied to an emphasized image in accordance with the speed of the movement to notify that imaging has not been successfully performed.

In addition, the screen is whited out, blacked out, or faded out in accordance with the speed of movement or at a certain threshold. The user may thus be notified that imaging cannot be performed since the user's movement is too fast, and the user may be urged to move slowly.

In addition, in a case where the movement is too fast or too slow, the self-indicator 2 may be faded out to notify the user.

Alternatively, a sound or vibration may be used to notify the user that his/her movement is too fast or too slow.

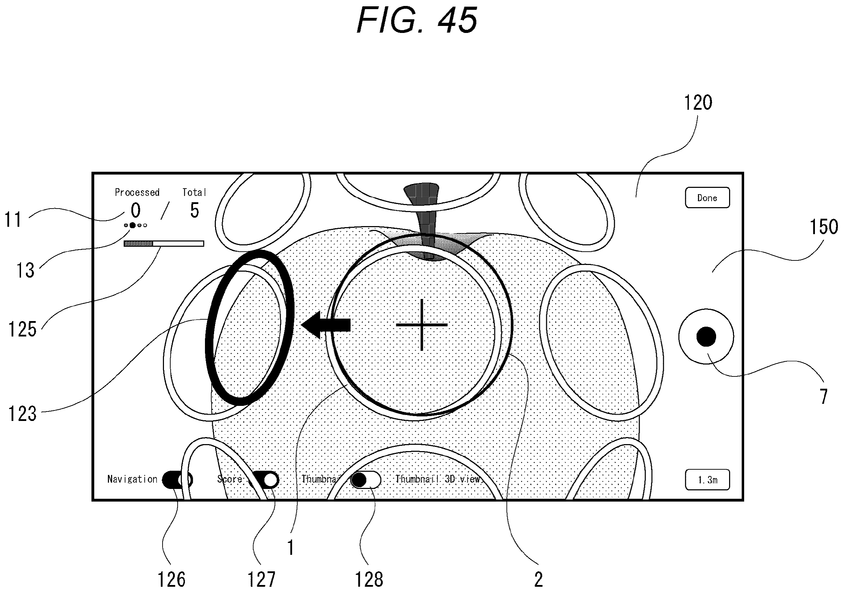

As a UI for guiding the moving speed, as illustrated in Fig. 45, a guide 123 moves first at a speed to be achieved. The user moves the imaging device 51 such that the self-indicator 2 follows the guide 123. A direction in which the guide 123 moves may be estimated from a direction in which the user has moved so far and the guide 123 may move in the estimated direction, or the guide 123 may move along a specified trajectory calculated in advance to allow the user to follow.

Alternatively, the guide 123 follows the user's movement (self-indicator 2) at an appropriate speed. The user moves the imaging device 51 at a speed at which the guide 123 follows at a constant interval.

In addition, it is also conceivable to guide with a sound or vibration of a rhythm corresponding to a moving speed between target indicators 1.

In the navigation screen 120, a UI for guiding the user may be displayed in a case where re-imaging is desired due to inappropriate imaging. That is, this is a UI for notifying the user of an intention to return the imaging position to a target indicator 1 that has been matched immediately before.

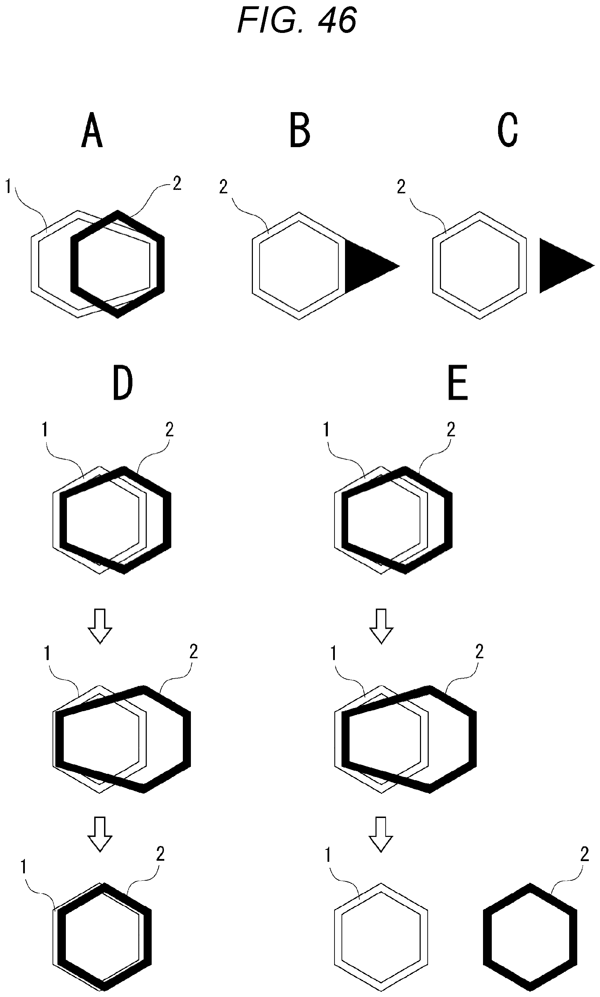

As illustrated in Fig. 46A, when the self-indicator 2 is moved from a target indicator 1 for which imaging has failed, the target indicator 1 may be displayed in such a way as to be pulled by the self-indicator 2 like rubber. The user sees this and returns the self-indicator 2 for re-imaging. When the user ignores this and moves the self-indicator 2 to a range of an adjacent target indicator 1, however, the self-indicator 2 may return from the stretched state to the original state.

In addition, as illustrated in Figs. 46B and 46C, for example, a triangle may be added to a side of the hexagon of the self-indicator 2 to notify the user of a direction in which the self-indicator 2 is to be returned.

In addition, as illustrated in Fig. 46D, when the self-indicator 2 is moved from a target indicator 1 for which imaging has failed, the self-indicator 2 may be displayed in such a way as to stick to the target indicator 1 and does not separate from the target indicator 1.

Note that when the user ignores this and moves the self-indicator 2 further away, the self-indicator 2 may be separated from the target indicator 1 as illustrated in Fig. 46E.

In addition, a shape and size of a target indicator 1 for which re-imaging is to be performed may be changed as the self-indicator 2 is separated.

In addition, as the self-indicator 2 moves away from the target indicator 1 for which re-imaging is to be performed, surrounding target indicators 1 may disappear, and the user may be made unable to recognize a next target indicator 1. As a result, the self-indicator 2 is returned to the target indicator 1 for which re-imaging is to be performed.

As a UI for notifying that quality of a captured image is not good from the viewpoint of the focus state, camera shake, exposure, and the like, for example, it is conceivable to indicate a corresponding portion on the subject. For example, an example in which an imaging portion is overlaid in green has been described, but in a case where the quality is low, red is overlaid, and the like.

In addition, a mode of the corresponding target indicator 1 may be set to a specific mode (color or shape) to indicate that the quality of the captured image is insufficient.

In addition, different display may be performed for each of causes of quality deterioration so that a portion in which the focus state is not good, a portion in which camera shake has occurred, a portion in which exposure is not appropriate, and the like can be distinguished.

Examples of information to be displayed in the navigation screen 120 include the following.
- The number of images uploaded to the server device 40
- The number of images captured
- The remaining number of images to be captured
- The number of thumbnails displayed in the simple preview window 10 or the like
- The number of captured images processed in 3D modeling for preview
- A ratio of the remaining number of images to be captured
- Estimated remaining scan time
- A ratio of the remaining number of images to be captured
- A predicted total number of images to be captured
- A ratio of the number of images captured to a planned number of images to be captured

As described above, it is preferable to display information regarding the number of images captured and the progress of 3D modeling for imaging or preview.

Although Fig. 13 and the like illustrate an example in which the number of images uploaded is displayed as the number of images 11 in the simple preview window 10, for example, the number of images captured and the like may be displayed in the simple preview window 10, instead.

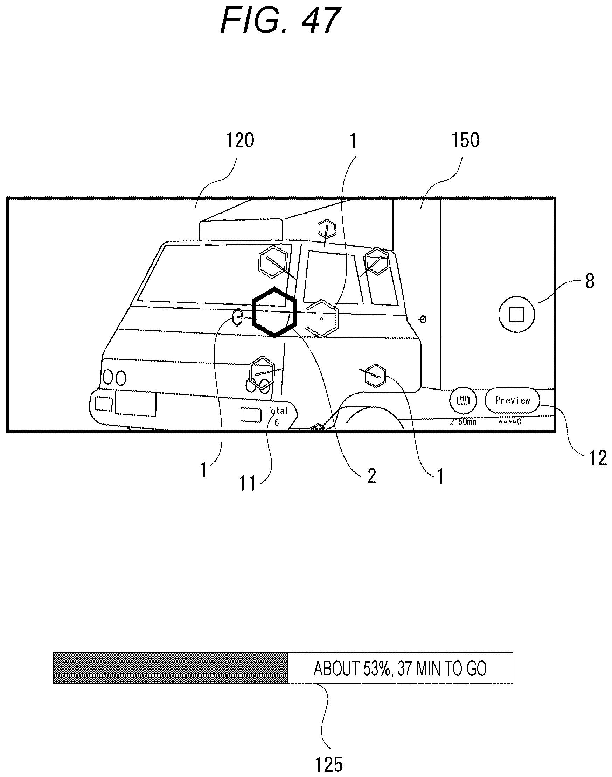

An upper part of Fig. 47 illustrates an example in which the simple preview window 10 is not provided in the navigation screen 120. For example, a preview button 124 is provided, and the screen transitions to the preview screen 130 by operating the preview button 124. In the case of such a navigation screen 120, the number of images captured is indicated as the number of images 11 in the screen. Of course, the number of images uploaded, the remaining number of images to be captured, the predicted total number of images to be captured, and the like may be displayed instead of, or in addition to, the number of images captured.

In addition, a plurality of numerical values may be displayed as the display of the number of images 11. For example, in the examples of Figs. 35 to 38, the number of images processed (Processed) and the total number of images captured (Total) are indicated as the number of images 11. In the example of Figs. 39 to 41, the number of thumbnails (Thumbnail) and the total number of images captured (Total) are indicated as the number of images 11.

In a case where a ratio such as a ratio of total remaining scan time or the remaining number of images to be captured or the ratio of the number of images captured is indicated, a numerical value thereof may be shown, but a progress bar 125 may be shown as illustrated in a lower part of Fig. 47. In addition, in this example, text display is also added, and the remaining ratio and time are clearly indicated.

Note that, in the display of the estimated remaining scan time, the ratio of the remaining number of images to be captured, the predicted total number of images to be captured, the ratio of the number of images captured among the planned number of images to be captured, and the like, the predicted total number of images to be captured and total operation time are calculated, but these may be corrected in accordance with an operation situation with a certain latitude.

As the information displayed in the navigation screen 120, an overlap ratio is also assumed. That is, it is a degree of overlap between a current field of view and a field of view of a frame captured immediately before. By displaying the overlap ratio, the user can easily recognize an appropriate imaging position.

As the information displayed in the navigation screen 120, a tracking state of an estimated position of the imaging device 51 is also conceivable. For example, the tracking state, a lost state, an initial state, a status of SLAM, and the like are possible. The imaging device 51 tracks the self-position through self-localization processing, and presents the situation to the user.

The moving speed (for example, m/sec) of the imaging device 51 may be displayed in the navigation screen 120. It is also useful to display the moving speed together with display of a speed bar or a speed meter illustrated in Fig. 44.

Since preview reconstruction processing in the server device 40 takes some time, it is preferable that movement in a background can be recognized on the navigation screen 120.

Therefore, display during uploading to the server device 40 and display of the number of images uploaded are useful. In addition, it is also conceivable to display the number of images, a ratio of the number of images, or the like for which 3D model generation processing for preview has been completed in the server device 40.

Speed of uploading to the server device 40 (MB/s, images/min, etc.) may be displayed. In particular, communication speed is important during the operation. It is also possible to make the user notice that a radio wave condition is bad.

In addition, in a case where a plurality of persons performs imaging, the following display is also useful.
- Progress display of the other persons (%)
- The total number of images captured by all the persons
- Total progress display of all the persons (%)

Next, variations of the definition setting will be described.

In step S101 of Figs. 28 and 34, it has been described that the definition is set in accordance with the user's operation. The user sets the definition, the necessary number of images to be captured or the necessary amount of imaging is planned in accordance with the definition, and navigation of an operation suitable for the definition desired by the user is performed. This is an example of a user interface for this definition setting.

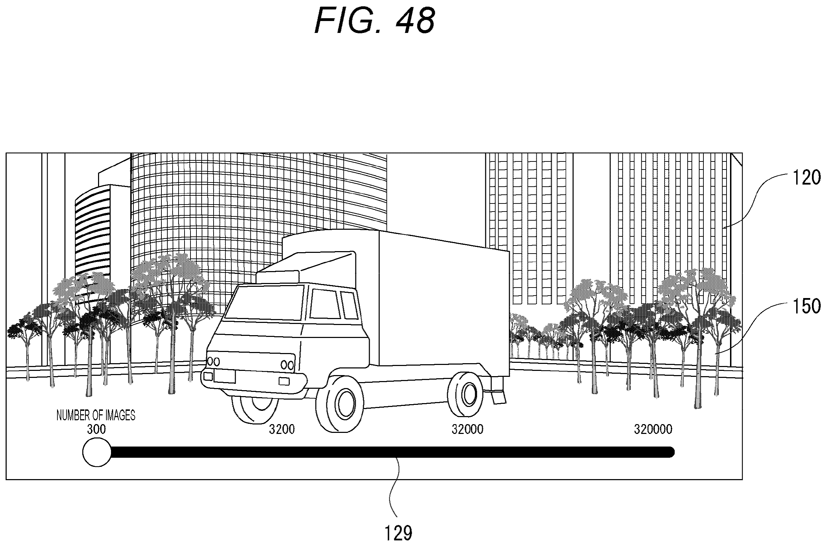

For example, Fig. 48 is an example of displaying a slide bar 129. When the user sets fineness using the slide bar 129, the imaging device 51 calculates an appropriate distance to the subject and reflects the calculated distance in the setting of recommended imaging positions.

A set value based on the slide bar 129 or the like may be continuous or discontinuous.

When the distance to the subject to be imaged is selected, the definition may be automatically set.

When a maximum number of images to be captured is selected, the definition may be automatically set.

When imaging operation time is selected, the definition may be automatically set.

When the target number of vertices or polygons to be achieved is set, the definition may be automatically set.

When weight (a photographic material and a 3D model viewpoint) of finished data is set, the definition may be automatically set. The number of storage media (memory cards or the like) necessary in this case can be recommended.

It is also possible to set the definition while viewing a preview of a quality corresponding to the number of images set. For example, a preview of target indicators 1 may be displayed in accordance with a position of the slide bar 129 in Fig. 48. Alternatively, a preview of a finished 3D model may be displayed in accordance with the position of the slide bar 129.

The number of persons set may be displayed to assume an operation by a plurality of persons or suggest how many persons are required.

Note that the number of recommended imaging positions (target indicators 1 displayed at the recommended imaging positions) may be changed adaptively even if the user does not set the definition. For example, recommended imaging positions are arranged more densely as an image is captured at a closer position, and arranged more sparsely as an image is captured at a farther position.

Alternatively, the number of images to be captured may be increased when an image is captured at a farther position.

The navigation screen 120 may be displayed such that a 3D model is completed from a black screen. That is, portions where the 3D model has not been formed are black, and the 3D model gradually appears in accordance with the progress of the imaging operation.

In a case where a plurality of persons performs imaging, colors and shapes of target indicators 1 in portions where imaging has been completed may be changed by a person so that who has performed the imaging in the portions can be recognized.

Next, an example of a preview function on the preview screen 130 will be described.

The imaging device 51 uploads captured image data to the server device 40, reconstructs a 3D model using resources of the server device 40, and receives the 3D model for preview. By displaying the 3D model for preview or a thumbnail thereof in the preview screen 130, the simple preview window 10, or the like, the user can accurately determine how much imaging has been completed during the imaging operation.

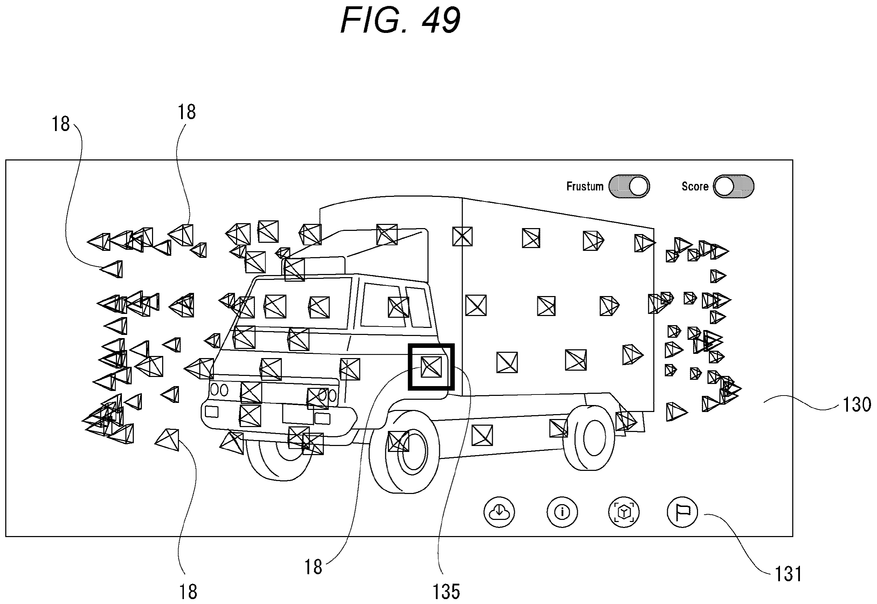

In this case, for example, portions having poor quality can be displayed in the preview screen 130. For example, a portion having a poor focus state, a portion where a camera shake has occurred, an exposure failure portion, and the like are clearly indicated. Fig. 49 illustrates an example in which a defective portion guide 135 is displayed in the preview screen 130. For example, imaging portions are indicated by frustums 18, and the defective portion guide 135 is displayed such that a red frame surrounds a frustum 18 of a portion where low-quality imaging has been performed, and presented to the user. This allows the user to determine whether re-imaging is necessary.

In addition, an option of individually excluding the imaging viewpoint at which the defective portion guide 135 is displayed and reconstructing the 3D model may be displayed.

In addition, it is desirable that defective portions presented in the preview screen 130 as described above and, for example, regions in which information is insufficient in the score display (see Fig. 27) of the preview screen 130 be cooperatively presented in the navigation screen 120.

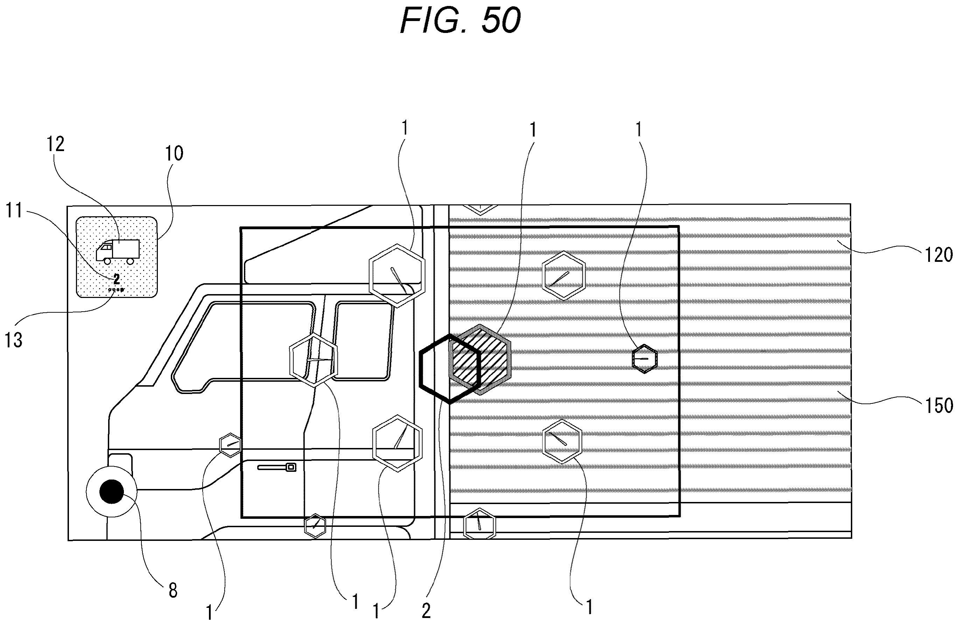

For example, in Fig. 50, on the basis of the preview processing, a target indicator 1 is displayed in a mode (a color, a shape, or the like) different from that for other target indicators 1 for a portion in which imaging is insufficient, and the user is urged to perform re-imaging, that is, to move the imaging position to the portion.

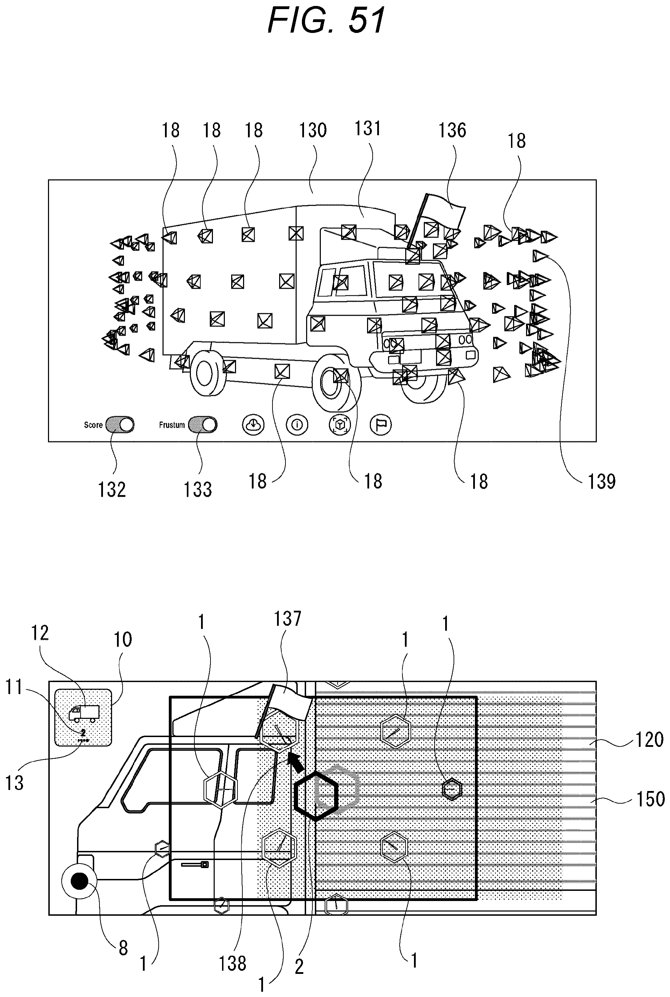

As illustrated in an upper part of Fig. 51, a flag 136 may be displayed in three dimensions for a portion where quality of a captured image is poor or a portion where the amount of information is insufficient in the preview screen 130.

In addition, as illustrated in a lower part of Fig. 51, a flag 137 is accordingly displayed in the vicinity of the target indicator 1 at a position corresponding to the flag 136 in the navigation screen 120.

In the preview screen 130, however, since a viewpoint direction can be arbitrarily changed by operation, even if the user recognizes the flag 136, it might be difficult for the user to recognize which direction the portion where the flag 136 was located corresponds to from the current imaging position when the user returns to the navigation screen 120. There is also a case where the portion corresponding to the flag 136 is invisible from the current imaging position. Therefore, a traveling guide 138 such as an arrow image is displayed to prompt the user to move the imaging position. The flag 137 is visible in the current field of view in the example in the lower part of Fig. 51, but in a case where the flag 137 is invisible in the current field of view, displaying the traveling guide 138, for example, in a left corner or a right corner of the navigation screen 120 makes it extremely easy to understand the direction to move.

By linking the preview screen 130 and the navigation screen 120 as described above, the user can proceed with the imaging operation while intuitively checking portions for which imaging has not been performed and portions for which re-imaging is to be performed.

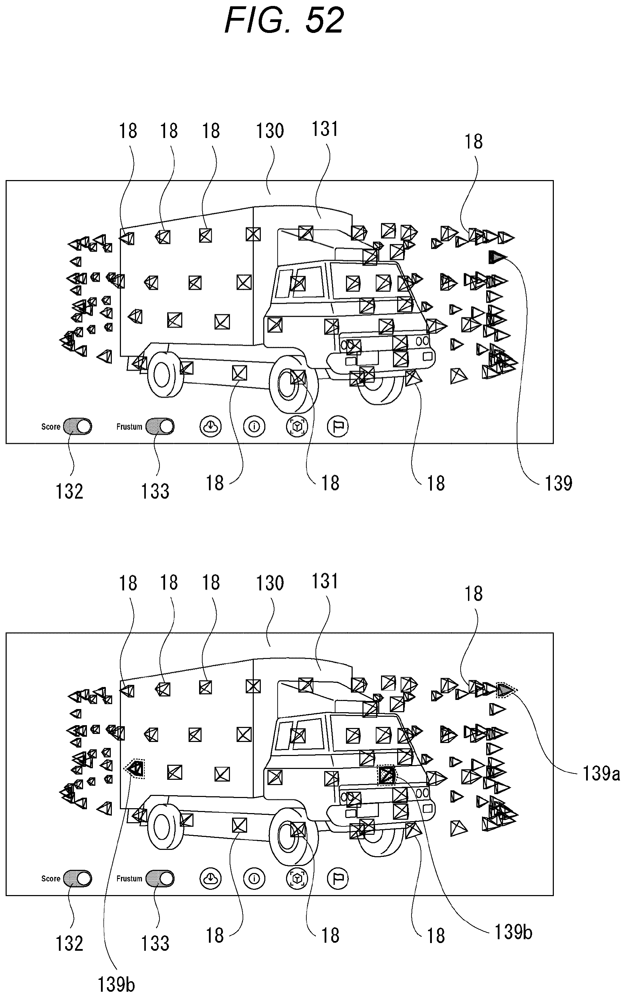

In the preview screen 130, a current position mark 139 indicating the current position of the imaging device 51 may be displayed together with the frustums 18 indicating the imaging positions as illustrated in an upper part of Fig. 52. As a result, the user can understand a relationship between the 3D model 131 displayed in the preview screen 130 and the current position.

In a case where a plurality of persons performs imaging, current position marks 139a, 139b, and 139c having different colors and shapes may be displayed as illustrated in a lower part of Fig. 52 so that positions of imaging devices 51 of the persons who are performing imaging in cooperation can be grasped.

Furthermore, images like figures of the users who are performing imaging may be displayed on the 3D model 131 to be previewed.

Next, an example of the ROI setting screen 110 will be described.

As described above, it is not necessary to set the ROI, but if set in advance, there is an advantage that the total number of images to be captured and the like can be predicted and presented to the user.

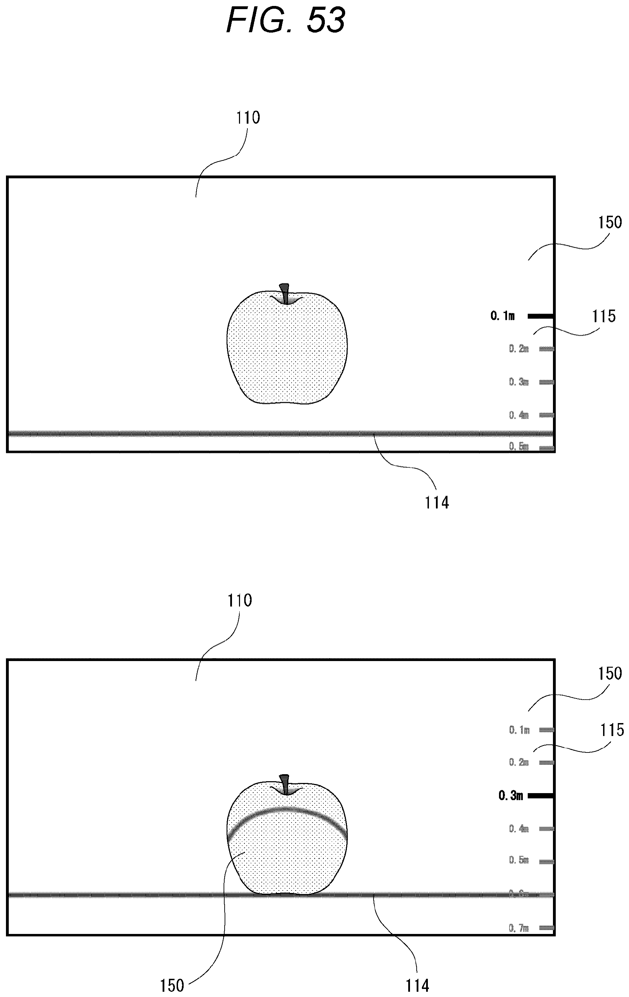

As the UI for the ROI setting, there is an example in which only a portion of a specific distance is displayed as a band 114 as illustrated in Fig. 53 to make the range easily settable, in addition to the UI described with reference to Figs. 9 to 12. A position of the band 114 can be specified by the user while viewing a scale 115.

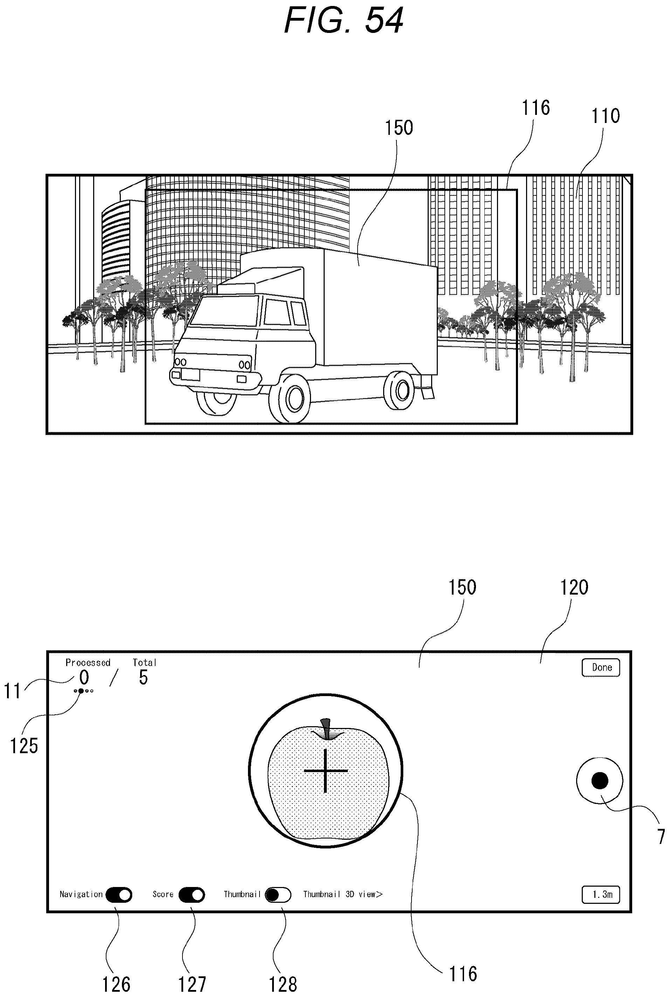

In addition, at a time of the pre-scanning described with reference to Figs. 9 to 12, it is also conceivable to display a rectangular or circular guide frame 116 as illustrated in an upper part or a lower part of Fig. 54 and display a message such as "Start imaging such that what you want to capture is fully shown in the frame" or "Start imaging from all directions around the subject" to the user.

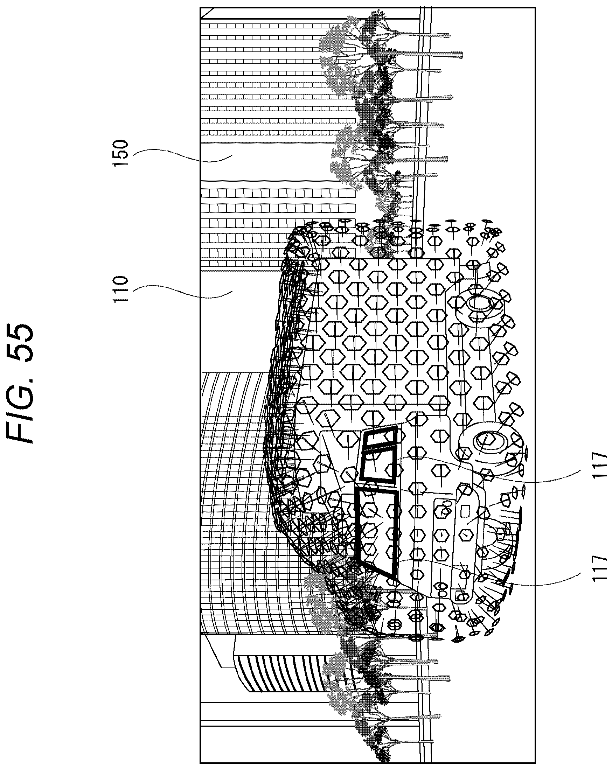

In addition, there are portions where depth information cannot be normally obtained, such as transmission portions of glass and the like in the subject. A lack of information may be complemented for such portions as portions corresponding frames 117 in Fig. 55 on the basis of surrounding depth information and target indicators 1 may be displayed so that the movement of the user is not restricted.

Relevance between the pre-scanning and the target indicators 1 is as follows.

At the time of the ROI setting, the user may capture rough images at a certain distance from the subject, so that the number of points to be recommended imaging positions is small. Since the information becomes finer after two or three rounds, display corresponding thereto is preferably performed.

The size and a display method of the target indicators 1 may be changed between the ROI setting screen 110 and the navigation screen 120.

### <6. Conclusion and Modifications>

According to the above-described embodiment, the following effects can be produced.

The imaging device 51 according to the embodiment includes a display control unit 30 configured to display the target indicator 1 (first indicator) indicating a recommended imaging position and the self-indicator 2 (second indicator) indicating a current imaging position in a superimposed manner on the monitor image 150 of an 3D object to be subjected to 3D modeling, and perform processing for changing display of the target indicator 1 in accordance with image obtaining processing for obtaining image data to be used for the 3D modeling. In addition, the imaging device 51 includes the imaging control unit 24 configured to perform the image obtaining processing in accordance with a result of a matching determination between the target indicator 1 and the self-indicator 2 on a screen (see Fig. 6).

For example, the imaging device 51 superimposes and displays the target indicator 1 on the imaging monitor image 150 in the navigation screen 120, and guides the user such that a position of the target indicator 1 (recommended imaging position) is set as a subject direction. The user adjusts the imaging position and the direction such that the self-indicator 2 indicating the imaging position thereof substantially matches the target indicator 1. Thereafter, the imaging device 51 automatically performs the image obtaining processing through the matching determination and changes the display mode of the target indicator 1 to indicate that an image has been captured (image obtaining processing).

Therefore, the user can cause the imaging device 51 to obtain a large amount of image data for 3D modeling (image obtaining processing) by performing an operation of moving around the object while directing the imaging device 51 toward the object. In particular, since the user does not need to perform shutter operations and just needs to move while carrying the imaging device 51 and aligning the frame of the self-indicator 2 with the frame of the target indicator 1, the operation is extremely easy.

In addition, since the display of the target indicator 1 temporarily changes in accordance with the timing of the automatic image obtaining processing as in the imaging success animation 5A in Fig. 17, for example, the user can recognize that the image obtaining processing has been automatically performed, and the user can be prevented from feeling discomfort or a sense of unease. In addition, the user can advance the imaging operation while feeling the progress of the operation with the imaging success animation 5A.

Note that the user may be notified of the execution of the image obtaining processing by outputting a notification sound or vibration together with a display change such as the imaging success animation 5A.

In addition, although a case of imaging a 3D object to be subjected to 3D modeling has been described as an example, an imaging opportunity is not limited thereto, and the technology of the present disclosure can be applied to various imaging opportunities. For example, it is possible to display the target indicator 1 indicating the recommended imaging position at an opportunity of imaging a certain subject without the purpose of 3D modeling, and to perform the image obtaining processing as a result of the matching determination with the self-indicator 2.

In the embodiment, an example has been described in which the display control unit 30 changes a display change mode of the target indicator 1 according to the image obtaining processing depending on a quality evaluation result of an image captured in the image obtaining processing.

For example, the display control unit 30 executes a temporary display change as the imaging success animation 5A in Fig. 17 in a case where quality of the image data obtained in the image obtaining processing is good, and as the imaging inappropriate animation 5B in a case where the quality is not good.

As a result, the user can recognize the quality of the obtained image data, and can return to the target indicator 1 for which the quality was inappropriate and perform re-imaging. This also improves the quality of the image data collected for 3D modeling, and also improves accuracy of a resulting 3D model.

In the embodiment, the target indicator 1 includes a geometric figure.

The target indicator 1 includes, for example, a geometric figure such as a circle, a triangle, a square, a rectangle, or a polygon with five or more sides as the navigation frame 3. By matching the self-indicator 2, which is a guide frame of a similar figure, with this figure, the user can easily understand how to perform the imaging operation for 3D modeling. In addition, the user can perform the operation as if he/she is enjoying a game like figure matching.

In the embodiment, an example in which the target indicator 1 includes a hexagonal shape has been described.

By providing the target indicator 1 with the hexagonal navigation frame 3, a direction relative to the self-indicator 2 can be easily understood, and the user can easily perform the operation of matching the self-indicator 2 with the target indicator 1.

In the embodiment, the target indicator 1 indicates a direction directly facing a subject.

For example, the target indicator 1 indicates a direction directly facing the subject with the direction presentation portion 4. In addition, for example, the hexagon of the navigation frame 3 also becomes a regular hexagon in the direct facing direction, and the navigation frame 3 at a position not in the direct facing direction becomes a non-regular hexagon according to a direction difference. As a result, the user can easily recognize the direct facing direction with respect to each target indicator 1, and can appropriately and efficiently advance the imaging operation.

In the embodiment, an example has been described in which the display control unit 30 performs processing for changing a mode of the first indicator 1 in accordance with a positional relationship between the imaging position and the recommended imaging position.

For example, with respect to the size of the target indicator 1, the display control unit 30 displays the target indicator 1 such that, for example, the target indicator 1 close to the imaging device 51 is large and the target indicator 1 far from the imaging device 51 is small.

In addition, with respect to the size of the target indicator 1, the display control unit 30 sets the size to be the same as that of the self-indicator 2 when the imaging device 51 is located at an optimum distance in the depth direction to a 3D object that is the subject, sets the size to be smaller when the imaging device 51 is far from the 3D object, and sets the size to be larger when the imaging device 51 is too close to the 3D object.

By changing the mode of the target indicator 1 in accordance with the positional relationship between the imaging position and the recommended imaging position in this manner, it is possible to guide the user such that the positional relationship appropriate for the image obtaining processing is achieved. The user can intuitively adjust the position of the imaging device 51 in accordance with the guidance.

Note that an example of changing the mode of the target indicator 1 in accordance with the positional relationship is not limited to the size change, and the shape may be changed, a color or luminance may be changed, or the size, the shape, the color, and the luminance may be changed in a complex manner.

In the embodiment, an example has been described in which the display control unit 30 performs processing for changing a mode of the first indicator 1 in accordance with a relationship between the imaging direction and the direct facing direction of the recommended imaging position.

For example, the display control unit 30 sets, for example, the direction presentation portion 4 to a needle shape and the navigation frame 3 to a hexagon as display for indicating that the target indicator 1 at a position where the imaging device 51 is directly facing the 3D object is directly facing the 3D object. When directly facing, the navigation frame 3 is a regular hexagon, and a tip of the needle of the direction presentation portion 4 at the center looks like a dot. The target indicator 1 in a not directly facing position performs display representing a not directly facing state, that is, for example, display indicating a direct facing direction with a direction of the needle of the direction presentation portion 4, display of making the navigation frame 3 a non-regular hexagon, or the like. By changing the mode of the target indicator 1 in accordance with the relationship between the imaging direction and the direct facing direction of the recommended imaging position, it is possible to guide the user to achieve an appropriate direction (imaging direction) with respect to the subject. The user can intuitively adjust the direction of the imaging device 51 in accordance with the guidance.

Note that an example of changing the mode of the target indicator 1 in accordance with the relationship between the imaging direction and the direct facing direction is not limited to the shape change, and the size may be changed, the color or the luminance may be changed, or the size, the shape, the color, and the luminance may be changed in a complex manner.

In the embodiment, an example has been described in which the display control unit 30 performs processing for displaying the target indicator 1 at a position where the image obtaining processing has been performed as a result of the matching determination with the self-indicator 2 in a mode different from a mode before the execution of the image obtaining processing.

For example, after presenting execution of the image obtaining processing with the imaging success animation in Fig. 17 or the like, the display control unit 30 displays the target indicator 1 in a mode different from an original mode. For example, a white color before the imaging is changed to gray. The size or the shape may be changed. As a result, the user can recognize whether each of a large number of target indicators 1 is one before the image obtaining processing or one after the image obtaining processing. Therefore, the user can efficiently advance the imaging operation by moving toward the target indicators 1 for which the image obtaining processing has not been performed.

In the embodiment, an example has been described in which the display control unit 30 performs processing for simultaneously displaying a plurality of the target indicators 1 in correspondence with a plurality of the recommended imaging positions in the monitor image 150.

The display control unit 30 displays the target indicator 1 at each of positions where execution of still image capturing is recommended. By recognizing the plurality of target indicators 1, the user can perform an imaging operation of sequentially going around the plurality of target indicators 1.

Note that only one target indicator 1 toward which the user is to go may be displayed. When the user performs imaging with the imaging unit 20 by matching the self-indicator 2 with the displayed target indicator 1, for example, a next target indicator 1 is displayed. An example in which the target indicators 1 to be targets are sequentially displayed in this manner is also conceivable.

In the embodiment, an example has been described in which the display control unit 30 performs processing for simultaneously displaying a plurality of the target indicators 1 in correspondence with a plurality of the recommended imaging positions in the monitor image 150, and makes display density of the target indicators 1 different in accordance with a shape of each of portions of a subject or a distance between the current imaging position and each portion of the subject.

For 3D modeling, for example, only a relatively small amount of information is needed in a portion of the subject having a planar and relatively monotonous shape, and therefore recommended imaging positions are roughly set and target indicators 1 are sparsely displayed. In a portion where a relatively large amount of information is desired to be obtained, such as a portion having a complicated shape or a curved surface, on the other hand, recommended imaging positions are densely set, and target indicators 1 are densely displayed. By performing the image obtaining processing in accordance with the target indicators 1, it is possible to perform image obtaining processing of an appropriate number of images that is not too large and not too small, and the operation becomes efficient.

Note that the density of the target indicators 1 is made different on the basis of set imaging definition. As a result, the image obtaining processing can be performed with an appropriate amount of operation corresponding to required accuracy of a 3D model.

In the embodiment, an example has been described in which the display control unit 30 performs display indicating a field of view of the image data obtained in the image obtaining processing on the monitor image 150.

The monitor image 150 is an image of a subject captured by imaging unit 32. Image data collected for 3D modeling, on the other hand, is obtained by the imaging unit 20. Therefore, the field of view of the imaging unit 20 is indicated by a field-of-view presentation frame 6. As a result, the user can recognize, on the monitor image 150, a range to be actually imaged.

In the embodiment, an example has been described in which the display control unit 30 performs, on the monitor image 150, display indicating a region on a subject for which the image obtaining processing has been completed.

For example, green is overlaid in a portion of the target subject in which the image obtaining processing has been performed to clearly indicate that image data has been obtained in the portion.

As a result, the user can perform the imaging operation while recognizing a progress state.

Note that, in a case where a plurality of camera operators performs the operation, a color of a portion where the image obtaining processing has been performed may be changed for each camera operator. As a result, each camera operator can proceed with the operation while recognizing his/her progress and regions where the other operators have completed the image obtaining processing.

In the embodiment, an example has been described in which the display control unit 30 displays information indicating a progress state of an operation related to 3D modeling in the monitor image 150.

For example, the number of images captured in the image obtaining processing, the number of images uploaded, or the like is displayed as the number of images 11 or the reduced preview 12 is displayed in the simple preview window 10 in the navigation screen 120. As a result, the user can perform the imaging operation while recognizing the progress state. In addition, information indicating the progress state of the imaging operation may be displayed in the navigation screen 120 without providing the simple preview window 10.

Examples of the operation related to 3D modeling include information indicating the progress state of imaging operation, information indicating a progress state of 3D model configuration processing based on obtained image data, and information regarding an imaging operation by a plurality of persons.

Specific examples of the information indicating the progress state of the imaging operation include the current number of images captured, the predicted total number of images to be captured, the estimated scan time, the remaining number of images to be captured, the remaining ratio, and the like in the image obtaining processing.

Examples of the information indicating the progress state of the 3D model configuration processing on a server device 40 side based on the obtained image data include the number of images being uploaded, the number of images uploaded, and the number/ratio of images for which preview processing has been completed.

Examples of the information regarding the imaging operation by a plurality of persons include progress display of other persons, the total number of images captured by all the persons in the image obtaining processing, and total progress display of all the persons.

Since the information indicating the progress state of the operation related to the 3D modeling varies depending on a situation of the operation, the display is sequentially changed.

In the embodiment, an example has been described in which the display control unit 30 performs processing for displaying a preview image of a 3D model generated on a basis of the image data obtained in the image obtaining processing.

For example, the display control unit 30 can switch from the navigation screen 120 to display the preview screen 130. As a result, the user can check how much the 3D model 131 has been generated at the present time even during the imaging operation.

Note that, since the 3D model 131 can be arbitrarily rotated on the preview screen 130, the user is likely to fail to recognize the self-position. Therefore, the self-position display may be performed with the current position mark 139 as illustrated in Fig. 52.

Note that display for guiding a rotation operation to a state of a viewpoint at the self-position may be performed by displaying an arrow or the like. As a result, the user can easily return to the preview screen 130 with his/her own viewpoint, and usability of the preview screen 130 can be improved.

In addition, in a case where a plurality of persons performs the imaging operation, it is preferable to display the current position marks 139a, 139b, and 139c in the preview screen 130 including the positions of the other persons so that mutual situations can be easily grasped.

The display control unit 30 may set the flag 136 as illustrated in Fig. 51 for a portion for which imaging has not been performed. The flag 137 is also displayed in the navigation screen 120 at a corresponding position. In doing so, the user can efficiently find a portion for which imaging has not been performed and perform the imaging operation.

In the embodiment, the display control unit 30 performs display indicating a region in the preview image for which the image obtaining processing has been completed.

For example, the display control unit 30 indicates imaged position in the image obtaining processing in the preview screen 130 with frustums 18 (quadrangular pyramid shape) or the like as illustrated in Fig. 26, so that the user can check the overall amount of operation and the progress.

Note that both the imaged positions and non-imaged position may be indicated by frustums 18 or the like. In this case, by making a display mode of the frustums 18 or the like different between the imaged positions and the non-imaged positions, it is easy for the user to check portions for which imaging has not been performed or portions for which imaging has been performed.

In addition, as illustrated in Fig. 27, the display control unit 30 adds green (stippled portion in the drawing) to portions of the preview screen 130 where the image obtaining processing has been performed to clearly indicate that image data has been obtained for the portions.

As a result, the user can perform the imaging operation while recognizing the progress state.

In the embodiment, an example has been described in which the display control unit 30 performs, in the preview image, display indicating quality of the image data obtained in the image obtaining processing or display indicating insufficiency of the image data.

For example, in the preview screen 130, the display control unit 30 clearly indicates portion where the quality of the image data is low in the preview screen 130 as illustrated in Fig. 49. In addition, as described with reference to Fig. 27, portions where image data has not been sufficiently obtained are indicated by a color different from green, which indicates that imaging has been performed, namely, for example, red (indicated by hatching in the drawing).

As a result, the user can recognize portions where re-imaging or additional imaging is to be performed even during the imaging operation, and is suitable for improvement in operation efficiency and accuracy of a 3D model.

Note that for portions for which it has been determined that imaging is insufficient on the basis of the preview processing, corresponding target indicators 1 may be emphasized in the navigation screen 120.

In the embodiment, an example has been described in which the display control unit 30 performs display related to moving speed of a user for an imaging operation.

For example, the display control unit 30 indicates that the movement is too fast or too slow as illustrated in Figs. 43 and 44. The user can adjust the moving speed while watching this, and as a result, can obtain high-quality image data.

In the embodiment, an example has been described in which the display control unit 30 performs display for urging a user to return the imaging position to the target indicator 1 according to the image obtaining processing depending on a quality evaluation result of an image captured in the image obtaining processing.

For example, as illustrated in Fig. 46, the display control unit 30 performs display for urging the user to return to the target indicator 1 for which imaging has been inappropriate. This makes it easy for the user to notice that the imaging position is to be returned for re-imaging.

A program according to the embodiment is a program for causing a processor such as a CPU or a DSP or a device including the processor, for example, to perform the process illustrated in Fig. 28, 34, or the like.

That is, the program according to the embodiment is a program causing the information processing device 70 to perform processing for displaying a target indicator 1 (first indicator) indicating a recommended imaging position and a self-indicator 2 (second indicator) indicating a current imaging position in a superimposed manner on a monitor image 150 of an object to be subjected to 3D modeling, image obtaining processing for obtaining image data to be used for the 3D modeling in accordance with a result of a matching determination between the target indicator 1 and the self-indicator 2 on a screen, and processing for changing display of the target indicator 1 in accordance with the image obtaining processing.

With such a program, the imaging device 51 having the user interface function in the embodiment can be achieved by the information processing device 70.

The program according to the embodiment described above can be stored in advance in an HDD as a storage medium built in a device such as a computer device, a ROM in a microcomputer including a CPU, or the like. In addition, such a program can be temporarily or permanently stored (recorded) in a removable storage medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable storage medium can be provided as so-called package software.

In addition, such a program may be installed from the removable storage medium into a personal computer and the like, or may be downloaded from a download site through a network such as a local area network (LAN) or the Internet.

In addition, such a program is suitable for providing the imaging device 51 according to the embodiment in various ways. For example, by downloading the program to a personal computer, a communication device, a mobile terminal device such as a smartphone or a tablet, a mobile phone, a gaming device, a video device, a personal digital assistant (PDA), or the like, it is possible to cause these devices to function as the imaging device 51 in the present disclosure.

Note that the effects described in the present specification are merely examples and are not restrictive, and other effects may also be produced.

Note that the present technology can also have the following configurations.
(1) An imaging device including:
   a display control unit configured to display a first indicator indicating a recommended imaging position and a second indicator indicating a current imaging position in a superimposed manner on an imaging monitor image, and perform processing for changing display of the first indicator in accordance with image obtaining processing for obtaining image data; and
   an imaging control unit configured to perform the image obtaining processing in accordance with a result of a matching determination between the first indicator and the second indicator on a screen.
(2) The imaging device according to (1), in which
   the display control unit changes a display change mode of the first indicator according to the image obtaining processing depending on a quality evaluation result of an image captured in the image obtaining processing.
(3) The imaging device according to (1) or (2), in which
   the first indicator includes a geometric figure.
(4) The imaging device according to any one of (1) to (3), in which
   the first indicator includes a hexagonal shape.
(5) The imaging device according to any one of (1) to (4), in which
   the first indicator indicates a direction directly facing a subject.
(6) The imaging device according to any one of (1) to (5), in which
   the display control unit performs processing for changing a mode of the first indicator in accordance with a positional relationship between the imaging position and the recommended imaging position.
(7) The imaging device according to any one of (1) to (6), in which
   the display control unit performs processing for changing a mode of the first indicator in accordance with a relationship between the imaging direction and the direct facing direction of the recommended imaging position.
(8) The imaging device according to any one of (1) to (7), in which
   the display control unit performs processing for displaying the first indicator at a position where the image obtaining processing has been performed as a result of the matching determination with the second indicator in a mode different from a mode before the execution of the image obtaining processing.
(9) The imaging device according to any one of (1) to (8), in which
   the display control unit performs processing for simultaneously displaying a plurality of the first indicators in correspondence with a plurality of the recommended imaging positions in the imaging monitor image.
(10) The imaging device according to any one of (1) to (9), in which
   the display control unit performs processing for simultaneously displaying a plurality of the first indicators in correspondence with a plurality of the recommended imaging positions in the imaging monitor image, and
   makes display density of the first indicators different in accordance with a shape of each of portions of a subject or a distance between the current imaging position and each portion of the subject.
(11) The imaging device according to any one of (1) to (10), in which
   the display control unit performs display indicating a field of view of the image data obtained in the image obtaining processing in the imaging monitor image.
(12) The imaging device according to any one of (1) to (11), in which
   the display control unit performs, on the imaging monitor image, display indicating a region on a subject for which the image obtaining processing has been completed.
(13) The imaging device according to any one of (1) to (12), in which
   the display control unit displays information indicating a progress state of an operation related to 3D modeling in the imaging monitor image.
(14) The imaging device according to any one of (1) to (13), in which
   the display control unit performs processing for displaying a preview image of a 3D model generated on a basis of the image data obtained in the image obtaining processing.
(15) The imaging device according to (14), in which
   the display control unit performs display indicating a region in the preview image for which the image obtaining processing has been completed.
(16) The imaging device according to (14) or (15), in which
   the display control unit performs, in the preview image, display indicating quality of the image data obtained in the image obtaining processing or display indicating insufficiency of the image data.
(17) The imaging device according to any one of (1) to (16), in which
   the display control unit performs display related to moving speed of a user for an imaging operation.
(18) The imaging device according to any one of (1) to (17), in which
   the display control unit performs display for urging a user to return the imaging position to the first indicator according to the image obtaining processing depending on a quality evaluation result of an image captured in the image obtaining processing.
(19) An imaging method performed by the imaging device, the imaging method comprising:
   processing for displaying a first indicator indicating a recommended imaging position and a second indicator indicating a current imaging position in a superimposed manner on an imaging monitor image;
   image obtaining processing for obtaining image data in accordance with a result of a matching determination between the first indicator and the second indicator on a screen; and
   processing for changing display of the first indicator in accordance with the image obtaining processing.
(20) A program causing an information processing device to perform:
   processing for displaying a first indicator indicating a recommended imaging position and a second indicator indicating a current imaging position in a superimposed manner on an imaging monitor image;
   image obtaining processing for obtaining image data in accordance with a result of a matching determination between the first indicator and the second indicator on a screen; and
   processing for changing display of the first indicator in accordance with the image obtaining processing.

In addition, the present technology may also employ the following configurations.
(101) An imaging device including:
   a display control unit configured to display a first indicator indicating a recommended imaging position and a second indicator indicating a current imaging position in a superimposed manner on an imaging monitor image of an object to be subjected to 3D modeling, and perform processing for changing display of the first indicator in accordance with image obtaining processing for obtaining image data to be used for the 3D modeling; and
   an imaging control unit configured to perform the image obtaining processing in accordance with a result of a matching determination between the first indicator and the second indicator on a screen.
(102) An imaging method performed by the imaging device, the imaging method comprising:
   processing for displaying a first indicator indicating a recommended imaging position and a second indicator indicating a current imaging position in a superimposed manner on an imaging monitor image of an object to be subjected to 3D modeling;
   image obtaining processing for obtaining image data to be used for the 3D modeling in accordance with a result of a matching determination between the first indicator and the second indicator on a screen; and
   processing for changing display of the first indicator in accordance with the image obtaining processing.
(103) A program causing an information processing device to perform:
   processing for displaying a first indicator indicating a recommended imaging position and a second indicator indicating a current imaging position in a superimposed manner on an imaging monitor image of an object to be subjected to 3D modeling;
   image obtaining processing for obtaining image data to be used for the 3D modeling in accordance with a result of a matching determination between the first indicator and the second indicator on a screen; and
   processing for changing display of the first indicator in accordance with the image obtaining processing.

Elements in (2) to (18) may be added to the above (101), (102), and (103).

### REFERENCE SIGNS LIST

- 1: Target indicator
- 2: Self-indicator
- 3: Navigation frame
- 4: Direction presentation portion
- 5A: Imaging success animation
- 5B: Imaging inappropriate animation
- 6: Field-of-view presentation frame
- 9: Colored region
- 10: Simple preview window
- 11: Number of images
- 12: Reduced preview
- 13: Operation presentation portion
- 15: Imaging execution frame
- 20: Imaging unit
- 24: Imaging control unit
- 25: Scoring processing unit
- 26: Output unit
- 27: Superimposed image generation section
- 28: Display image generation section
- 29: Communication unit
- 30: Display control unit
- 31: Depth sensor
- 32: Imaging unit
- 33: IMU
- 34: SLAM
- 35: TSDF update unit
- 36: Mesh generation unit
- 40: Server device
- 41: Communication unit
- 42: Photogrammetry processing unit
- 43: Storage unit
- 51: Imaging device
- 52: Sensor unit
- 53: Interface device
- 54, 55: Display
- 70: Information processing device
- 110: ROI setting screen
- 120: Navigation screen
- 130: Preview screen
- 131: 3D model
- 150: Monitor screen

## Claims

1. An imaging device comprising:
a display control unit configured to display a first indicator indicating a recommended imaging position and a second indicator indicating a current imaging position in a superimposed manner on an imaging monitor image, and perform processing for changing display of the first indicator in accordance with image obtaining processing for obtaining image data; and
an imaging control unit configured to perform the image obtaining processing in accordance with a result of a matching determination between the first indicator and the second indicator on a screen.

2. The imaging device according to claim 1, wherein
the display control unit changes a display change mode of the first indicator according to the image obtaining processing depending on a quality evaluation result of an image captured in the image obtaining processing.

3. The imaging device according to claim 1, wherein
the first indicator includes a geometric figure.

4. The imaging device according to claim 1, wherein
the first indicator includes a hexagonal shape.

5. The imaging device according to claim 1, wherein
the first indicator indicates a direction directly facing a subject.

6. The imaging device according to claim 1, wherein
the display control unit performs processing for changing a mode of the first indicator in accordance with a positional relationship between the imaging position and the recommended imaging position.

7. The imaging device according to claim 1, wherein
the display control unit performs processing for changing a mode of the first indicator in accordance with a relationship between an imaging direction and a direct facing direction of the recommended imaging position.

8. The imaging device according to claim 1, wherein
the display control unit performs processing for displaying the first indicator at a position where the image obtaining processing has been performed as a result of the matching determination with the second indicator in a mode different from a mode before the execution of the image obtaining processing.

9. The imaging device according to claim 1, wherein
the display control unit performs processing for simultaneously displaying a plurality of the first indicators in correspondence with a plurality of the recommended imaging positions in the imaging monitor image.

10. The imaging device according to claim 1, wherein
the display control unit performs processing for simultaneously displaying a plurality of the first indicators in correspondence with a plurality of the recommended imaging positions in the imaging monitor image, and
makes display density of the first indicators different in accordance with a shape of each of portions of a subject or a distance between the current imaging position and each portion of the subject.

11. The imaging device according to claim 1, wherein
the display control unit performs display indicating a field of view of the image data obtained in the image obtaining processing in the imaging monitor image.

12. The imaging device according to claim 1, wherein
the display control unit performs, on the imaging monitor image, display indicating a region on a subject for which the image obtaining processing has been completed.

13. The imaging device according to claim 1, wherein
the display control unit displays information indicating a progress state of an operation related to 3D modeling in the imaging monitor image.

14. The imaging device according to claim 1, wherein
the display control unit performs processing for displaying a preview image of a 3D model generated on a basis of the image data obtained in the image obtaining processing.

15. The imaging device according to claim 14, wherein
the display control unit performs display indicating a region in the preview image for which the image obtaining processing has been completed.

16. The imaging device according to claim 14, wherein
the display control unit performs, in the preview image, display indicating quality of the image data obtained in the image obtaining processing or display indicating insufficiency of the image data.

17. The imaging device according to claim 1, wherein
the display control unit performs display related to moving speed of a user for an imaging operation.

18. The imaging device according to claim 1, wherein
the display control unit performs display for urging a user to return the imaging position to the first indicator according to the image obtaining processing depending on a quality evaluation result of an image captured in the image obtaining processing.

19. An imaging method performed by the imaging device, the imaging method comprising:
processing for displaying a first indicator indicating a recommended imaging position and a second indicator indicating a current imaging position in a superimposed manner on an imaging monitor image;
image obtaining processing for obtaining image data in accordance with a result of a matching determination between the first indicator and the second indicator on a screen; and
processing for changing display of the first indicator in accordance with the image obtaining processing.

20. A program causing an information processing device to perform:
processing for displaying a first indicator indicating a recommended imaging position and a second indicator indicating a current imaging position in a superimposed manner on an imaging monitor image;
image obtaining processing for obtaining image data in accordance with a result of a matching determination between the first indicator and the second indicator on a screen; and
processing for changing display of the first indicator in accordance with the image obtaining processing.
